# EUROPEAN PATENT SPECIFICATION

(11) **EP 3 146 826 B1**
(45) Date of publication and mention of the grant of the patent: **11.12.2019**
(21) Application number: 16187332.8
(22) Date of filing: 06.09.2016
(51) Int. Cl.: A01B 73/06

(54) **AGRICULTURAL IMPLEMENT**
LANDWIRTSCHAFTLICHES ARBEITSGERÄT
OUTIL AGRICOLE

(30) Priority: 09.09.2015 GB 201515975; 19.01.2016 GB 201600987; 14.06.2016 GB 201610306
(43) Date of publication of application: 29.03.2017
(73) Proprietor: Brock, Arthur Philip Harvey, Thaxted, Essex CM6 2RH (GB)
(72) Inventor: Brock, Arthur Philip Harvey, Thaxted, Essex CM6 2RH (GB)
(74) Representative: Dolleymores

(56) References cited:
- WO-A1-88/01470
- WO-A1-2007/043965
- WO-A1-2011/074945
- WO-A1-2011/112080

## Description

The present invention relates to an agricultural implement and particularly, but not exclusively, to towed rollers, presses or discs.

When working large fields, it is usually desirable that a towed implement working the land be as wide as possible in order to reduce the number of wheelings left by a tractor towing the implement and to increase efficiency. This is subject to the tractor towing the implement having sufficient power and traction.

Operations such as rolling or pressing require relatively little energy, compared to ploughing for example, or other cultivation processes so the implements can be relatively wide and cover a large area on each pass. Here the maximum working width is often constrained by physical constraints on the carriage or drawbar and/or frame to which the presses are mounted. This primarily occurs because the frames normally need to be folded for transportation, (normally to a width of between 2 to 3 meters to allow for transportation through gateways, along roads and also for initial delivery of the implement to a farm). However, in addition to this the frame also has to be flexible, so that the roller, press or discs can follow the contours of the land.

Two examples of known presses are the Mohn Mohnstrum™ press and the Amazone™ BBG B428 press. In a working configuration these both employ a linear array of presses, without levelling boards, with the presses arranged in a staggered configuration, with each press being mounted to an associated section of a frame. Sections of frame are pivotally joined to form two linear arrays of presses, which can adapt to the contours of the land by virtue of being pivotally connected to each other. Each array is pivotally connected at one end to a respective side of a central carriage, from which they extend. The carriage has a single narrow drawbar with transport wheels located at a rear end, with the arrays of presses pivotally connected to the drawbar at a point adjacent to the transport wheels, at the back of the drawbar. In a working configuration the drawbar and presses thus form a T-shape configuration, where the trunk of the T is the drawbar. Tie bars are manually connected between a midpoint on the drawbar and a midpoint on each array of presses.

With these presses, when it is desired to transport them, the end press of each set of the presses is folded upward by a hydraulic ram, the tie bars are manually disconnected and the arms are then swung in by a further hydraulic ram, possibly being assisted by the implement being reversed by the tractor, so that each array of presses folds in towards the drawbar. Each array of presses is pivotally connected to the drawbar in a manner such that the arrays each fold in close to the drawbar, in front of the transport wheels and thus, in a transport configuration, the implement is no wider than the transport wheels.

When folded in the sections of arms supporting the presses engage with brackets extending outwards from the drawbar. The drawbar is then raised by lowering the transport wheels and raising the three point linkage on the tractor, so that the presses are lifted clear of the ground.

With an arrangement of presses of the above described type, the distance between the towing hitch on the front of the drawbar and the wheels at the rear of the drawbar has to be sufficient to accommodate the presses along the sides of the drawbar. However where it is necessary to transport the presses by road or to negotiate farm tracks and gateways, this distance between the towing hitch on the front of the drawbar and the wheels at the rear is often dictated by the maximum desired wheelbase necessary to permit the implement to be conveniently towed for transportation purposes. Thus, even with the presses at the end of each frame flipped over and carried above the penultimate press at the end of that frame and with only the remaining presses accommodated along the length of the drawbar (leaving the front portion of the drawbar clear to accommodate the rear wheels of the tractor when turning) the permissible length of the drawbar for towing purposes will often dictate the maximum width of the implement.

In addition to the above (and particularly where the end presses are flipped over doubling the weight on the adjacent presses at the end of the each frame), considerable scrubbing of the presses occurs during opening and closing, particularly as the frames conclude their arc, swinging back alongside the drawbar, where the presses become substantially parallel to the drawbar. This limits the ability to assist closure by reversing the implement, for the heavy presses will not slide sideways. This again is therefore a limiting factor on the maximum implement width for a given weight of press.

Patent applications having publication numbers WO88/01470, WO2011/074945, WO2007/043965 and WO2011/112080 all disclose examples of agricultural implements which are aimed at addressing one or more of the above mentioned problems and generally disclose the features of the pre-characterising portion of present claim 1.

According to the present invention there is provided an agricultural implement as recited in claim 1.

The present invention provides an agricultural implement which permits frames, bearing tools or similar, to be mounted in a working configuration at the distal end of the drawbar, away from towing hitch, with the drawbar of sufficient length to ensure the implement is correctly centred when towing. However, as the frames are not fixed to the rear of the drawbar and do not fold forward, the drawbar does not have to be longer than the frames and may be significantly shorter. Instead the carriage carrying the drawbars can be moved forward along the drawbar, leaving sufficient clearance for the rear wheels of the tractor when turning, and the frames may then extend rearwards beyond the length of the drawbar. This is particularly advantageous where each frame has at least one transport wheel mounted towards a distal end thereof, for this enables the implement, in a transport configuration, to be supported by the transport wheels on the frames and the towing hitch. This avoids transport wheels having to be provided on the drawbar and the drawbar having to be of sufficient strength to support the weight of the implement.

The carriage may comprise a tubular member arranged to slide coaxial on the drawbar.

The agricultural implement being arranged so that the frames can be opened outward from the transport configuration to their working configuration, prior to the drawbar being pulled through the carriage to place the implement into the working configuration, means that any stresses placed on the drawbar while the frames are being opened will be placed on the drawbar close to the towing hitch. Then, only when the frames have been opened, where in the case of rollers, presses or discs, the weight of the rollers, presses or discs will be supported directly by the ground or by transport wheels on the frames, need the carriage travel to the distal end of the drawbar. The same applies when the frames are folded from the working configuration back to the transport configuration.

Preferably the implement further comprises a mounting on the drawbar located forward of the position of the carriage when in the transport configuration, with two restraining arms each attached at one end to the mounting and at their other ends to respective frames, which restraining arms are telescopic and are arranged to be extended by the action of drawing the drawbar forward relative to the carriage. This provides a relatively simple way by which the tractor can be used to extend and retract the restraining arms, which restraining arms retain the frames and drawbar in a T-shaped configuration when in the working configuration, requiring only that once extended they be locked in place, which can be done manually or by means of small hydraulic rams.

Advantageously the distance from the front of the drawbar to the point on the carriage to which the frames are pivoted, in the working configuration, is between 0.2 and 0.3 times the maximum width of the implement, which ratio normally permits centralised towing of the implement to be achieved when in the working configuration.

The agricultural implement may have a left hand frame arranged to extend to the left hand side of the drawbar and a right hand frame arranged to extend to the right hand side of the drawbar, each frame comprising a plurality of sub-frames, each sub-frame supporting an axle supporting a roller, press or discs, each sub-frame being pivotally connected to an adjacent sub-frame or sub-frames so that in use, in an open working configuration where each frame extends substantially orthogonally from the drawbar, each of the left hand and right hand frames may flex by virtue of adjacent sub-frames pivoting relative to each other to permit the associated rollers, presses or discs to follow the contours of land, being worked wherein each frame is pivotally connected towards but remote from a proximal end, directly or indirectly to the drawbar and has at or towards a distal end one or more transport wheels arranged to support the respective frame when in a transport configuration, each frame further comprising a locking mechanism arranged to lock adjacent sub-frames together so that the respective rollers, presses or discs all lie substantially on a common substantially horizontal plain and wherein the frames may be folded from the open working configuration to the closed transport configuration, where each frame is folded so that the frames extend in the same direction and lie substantially parallel to each other and to the axis of the drawbar.

The references to a frame or frames, sub-frame or sub-frames above and throughout the specification, including the claims, is to interpreted to encompass any relatively rigid structural supporting member, normally formed of steel, regardless of whether this be formed of a number of interlinked components or a single box section, similar tubular component or any other substantially rigid component.

An agricultural implement in accordance with such an embodiment permits the sub-frames to be brought together and locked in a horizontal plain so that rollers, presses or discs carried by the sub-frames can be raised by the transport wheels, located at or towards the ends of the frames, raising the frames and thus lifting the rollers and presses off the ground, or at least greatly reducing the weight of the rollers and presses on the ground. The transport wheels, normally fixed in direction relative to the frames and aligned along the axis of the frames, supporting the weight of the frames and the rollers, presses or discs, permitting the frames to be opened and closed between their transport and working configurations by towing or pushing the implement forwards or backwards.

An additional advantage of this embodiment is that, in a transport configuration, the sub-frames may remain locked together so that the frames are substantially rigid and self-supporting. This may enable them to be at least partly counterbalanced on the transport wheels. The frames may extending from the transport wheels along the drawbar to a point towards the front of the drawbar, set back from the front of the drawbar by a length sufficient to permit the rear tractor wheels to be accommodated when turning. This may significantly reduce the stresses on the drawbar, particularly during relative high speed transportation, because the frames may carry some of the weight that would otherwise be carried along the length of the drawbar.

Advantageously, when in the transport configuration, the frames are preferably folded such that the proximal ends of the frames are located forward of their respective transport wheels. This is possible because the transport wheels are attached towards the distal ends of the frames instead of being attached to the drawbar. This permits the frames to extend along the length of the drawbar and also permits the frames to be significantly longer than the length of the drawbar. The drawbar only needs to be of a sufficient length to ensure the implement tows in a straight line when the implement is in use, in the working configuration. Typically the drawbar only needs to have a length of between 0.2 and 0.3 times the maximum width of the implement when in the working configuration. Thus where the implement is a 24 metre roller or press, the drawbar may be less than 5.9 metres in length.

For the purposes of the present specification, "towards the distal end of the frame" or "frames" is to be interpreted as meaning closer to the distal end than the proximal end, thus "beyond the mid-point". The transport wheels could be mounted at the distal ends of the frames, but by being set in from the distal ends some of the weight of the rollers, presses or discs will be to be counter balanced on those transport wheels, reducing the loading on the drawbar and the tractor supporting the drawbar. It will also make the implement more manoeuvrable in the transport configuration, by shortening the wheel base. One or more of the transport wheels may be positioned at one or multiple points along each frame and one transport wheel may be placed on one sub-frame, with another transport wheel on a separate sub-frame of the same frame.

Preferably the locking mechanisms may be activated in the transport configuration to lock the sub-frames such that the frames may be supported by the transport wheels, raising the rollers, presses or discs such that the implement may be reversed whilst initially in the transport configurations to cause, or assist, the frames to open towards the working configuration. This enables the weight of the rollers, presses or discs to be carried by the transport wheels and possibly, depending on ground conditions, to lift the presses or wheels clear of the ground. However, even when not clear of the ground the weight of the rollers, presses or discs on the ground will be greatly reduced, such that the scuffing forces causes by sideways travel of the rollers or presses relative to the ground should not prevent the implement being reversed and the frames opening to the working configuration.

Advantageously, the implement further comprises a synchronisation linkage extending from each frame and connected directly or indirectly to the drawbar, the synchronisation linkage being arranged such as to cause the two frames to open in synchronisation with each other. The synchronisation linkage may comprise a central portion slideable forwards and backwards on the drawbar and two arms, each connected between the central portion and a respective frame. In this way the synchronisation linkage may work in a manner similar to that of an umbrella, where the central portion, slideable forwards and backwards on the drawbar, functions in the same manner as the runner on the tube of the umbrella, evenly moving the stretchers, thus ensuring that the ribs supporting the fabric open at a uniform rate.

Preferably in the proximal ends of the frames are each pivotally connected in a substantially vertical axis to the carriage, to enable them to open and close between the transport configuration and the working configuration.

An advantage of this arrangement is that the implement may be arranged such that, in the transport configuration, the carriage is towards the front of the drawbar and is arranged to stay towards the front of the drawbar whilst the implement is reversed to open the frames into their working configuration, whereby the drawbar is then arranged to be subsequently drawn forward relative to the carriage. This enables the bulk of the drawbar, in the transport configuration, to be housed between the self-supporting frames of the implement, with the drawbar extending only a short distance out of the front of the carriage, possibly by less than two metres, just sufficient to permit the rear tractor wheels to clear the carriage when turning whilst, in the working configuration, permitting the drawbar to be drawn forward to provide a sufficient length of drawbar, normally a quarter of the maximum width of the implement, to ensure the implement tows centrally.

Preferably the carriage is slideable on the drawbar. This can be achieved by the carriage comprising a box section central component coaxially mounted on a box section drawbar and slideable along the drawbar.

Preferably the agricultural implement comprises one or more further axles supporting a roller, press or discs which axle or axles is / are mounted on the carriage. This axle may carry a roller, press or discs and may be arranged to overlap with the first roller, press or discs on the first sub-frames of the adjacent frames. Also this central roller, press or discs may carry some of the weight of both the drawbar and the proximal ends of the frames when reversing the implement or pulling the implement forward in order to open or close the frames. This central roller, press or discs carrying some weight while opening or closing the implement is not problematic, for it will be aligned with the direction of travel. The implement is preferably arranged such that when in the closed transport configuration this central roller, press or discs may be lifted clear of the ground by the transport wheel at or towards the distal end of the frames and the tractor raising the front of the drawbar.

When the frames have been opened to the working configuration the central portion of the synchronisation linkage will be in close proximity to the carriage and it is preferably arranged to be locked to the carriage, thereby acting with the retaining arms to maintain the frames orthogonal to the drawbar.

In any of the above embodiments the implement may comprise a central frame section carried by the drawbar, which frame section can be the same entity as the carriage to which the left hand frame and right hand frames are pivotally attached in a horizontal plain, so that the central frame and the left hand and right hand frames all flex relative to each other by being pivotally attached to each other, wherein a locking mechanism is also provided between the central frame and adjacent sub-frames of the left and right hand frames, permitting the left hand, central frame and right hand frame to be aligned and locked in a common vertical plain.

In one embodiment, each of the left hand and right hand frames has one or more transport wheels mounted on a common axis, which axis can be rotated to change the direction of the wheel or wheels relative to the frame. Mounting the, or all, the transport wheels of a frame on a common axis avoids scrubbing when the frames are opened and closed. Also, having wheels which can be rotated (by which it is meant that the axle on which the wheels are mounted can be rotated) permits the transport wheels to be steered and the implement preferably further comprises means to angle the wheels on both the left and right hand frames outwardly, when facing toward the rear in the transport configuration, such that when the implement is reversed in the transport configuration the outward facing wheels cause the frames to open. This greatly assists in shortening the distance for which it would otherwise be necessary to reverse the implement to permit the frames to open. Alternatively, the implement may comprise means to angle the wheels on both the left and right hand frames outwardly, when facing forward in the transport configuration, such that when the implement is pulled forward in the transport configuration the outward facing wheels cause the frames to open. This again greatly assists in shortening the distance for which it would otherwise be necessary to pull the implement forward to permit the frames to open.

The implement may comprise means to angle the transport wheels on both frames in the same direction, so that the wheels may be turned together in the same direction to steer the implement when the frames are locked together in the transport configuration. This permits the implement to have rear wheel steering to enable it to be manoeuvred through gateways or farm yards for example. To implement this, the wheel or wheels of each frame may have two hydraulic rams mechanically connected in series, wherein: fully contracting and fully expanding respective rams causes the wheel or wheels to substantially align with the frame; contracting both hydraulic rams causes the wheels to be turned in a first direction relative to the frame; and expanding both rams causes the wheels to be turned in a direction opposite to the first direction. This provides an easy way to "centre" the wheels and to provide a crude steering function using standard flow control valves (or diverter valves) commonly used on agricultural equipment. The wheels may be arranged to be angled between 8 and 15 degrees either way from a centre position where they are aligned with their respective frames.

Each sub-frame may support an associated press or roller with adjacent rollers or presses being staggered and overlapping, wherein in a working configuration adjacent sub-frames may flex relative to each other about substantially horizontal sub-frame pivot axes and wherein all the rollers or presses are arranged to be in contact with the ground, the locking mechanism being arranged to align and lock adjacent sub-frames together so that the sub-frames lie in a substantially linear horizontal line, the implement further comprising means to then rotate the locked sub-frames from the working configuration about an axis, substantially parallel to the frames and perpendicular to the drawbar. This rotating (or raising) of the frames may stack the staggered rollers one above the other, reducing the width of the frame in the transport configuration and thus the width of the implement. Also, where adjacent sub-frames are pivotally connected together by respective pivots, and the pivots in the working configuration have their rotational axes substantially horizontal and aligned with a longitudinal axis of the implement, then when the frames are rotated the pivots between the frames will have their rotational axes aligned substantially vertically. This reduces the strain on the locking mechanism, as gravity acting on the mass of the presses or rollers then acts on the pivots themselves and not the locking mechanisms, by virtue of the axes of the pivots being substantially vertical when in the transport configuration.

Preferably the transport wheels can be rotated, such that they are substantially orthogonal to their respective frames and whereby rotating the frames about the axis, substantially perpendicular to the drawbar, raises the presses or rollers and transfers the mass of the presses or rollers and the frames substantially on to the transport wheels. In this manner the transport wheels can be arranged to effectively roll under the frames as the frames are raised. Once the transport wheels are supporting the presses or rollers, the transport wheels can then be rotated such that they are substantially aligned with the frames, ready for the implement to be towed forward to close the frames.

An inner sub-frame at the proximal end of each frame may be pivotally connected to the carriage by a pivot which permits the inner sub-frame to flex vertically relative to the carriage when in the working configuration, but which same pivot, once the locked sub-frames have been rotated, is orientated such that the axis of rotation of the pivot is substantially vertical and permits the frames to fold together into the transport configuration.

A locking mechanism for two pivotally connected members (sub-frames) of the implement may be provided on the implement, the mechanism comprising:
a first member;
a second member pivotally connected to the first member about a pivot axis; and a linkage between the two, which linkage in a first position permits the first member to freely pivot relative to the second member, at least to a limited extent, but wherein moving the linkage to a second position forces the first member to a predetermined rotational position relative to the second member and rotationally locks the first and second members to each other.

The locking mechanism may comprise a first bracket extending from the first member at or towards an end of the first member which is adjacent to the second member;
a second bracket extending from a first end of the second member at or towards an end of the second member adjacent the first member wherein the linkage is fixed to one of the brackets and extends between the two adjacent brackets;
an actuator having a first end attached to the linkage arranged, in use, to urge the linkage in a first direction to the first position and to urge the linkage in a second direction to the second position;
two bearing points provided on either one of, or one on each of, the two adjacent brackets with a force on a first bearing point causing the first member to pivot in a first direction relative to the second member, and a force on the second bearing point causing the first member to pivot in a second direction opposite to the first direction; the actuator when urging the linkage in the second direction causing the linkage to exert a force on one of the first or second bearing points to force the first member to the predetermined rotational position relative to the second member; and the actuator when urging the linkage in the first direction acting on the linkage to cause the linkage to release the first and second bearing points, to permit the first and second members to freely pivot relative to each other, at least to a limited extent.

The locking mechanism thus first aligns the two pivotally connected members (sub-frames) before locking them into position. The actuator may advantageously be a hydraulic ram.

Advantageously, both bearing points are on the first bracket and the linkage comprises a lever pivotally connected towards a midpoint to the second bracket with a first end of the lever connected to the actuator and a second end having a first engagement portion to engage with one of the bearing points.

The linkage may further comprise a second engagement portion arranged to engage with the second bearing point, the linkage being arranged such that movement of the actuator in a first direction causes the first and second engagement portions to move in opposite directions, forcing the second bracket to a predetermined position relative to the first bracket.

Alternatively, the first and second bearing points are bearing surfaces which form the sides of a slot having a tapered mouth extending to a narrow section, wherein the first engagement member comes into contact with one of the sides of the slot and rotates the first member relative to the second member until it is at the narrow section of the slot and is relatively close to, or comes into contact with, both bearing surfaces where it retains the first member in the predetermined rotational portion relative to the second member.

These arrangements permit the actuator to act in both directions on the bracket and therefore drive it to the predetermined position.

The locking mechanism is described above in relation to locking two pivotally connected members (sub-frames) together. However it may lock the multiple sub-frames of each frames together. Here the locking mechanism may comprise a third member (sub-frame) pivotally connected, on a second pivotal axis parallel to the first pivotal axis, to a second end of the second member opposite the first end of the second member, wherein the adjacent ends of the second and third members have brackets mounted thereon substantially identical to the first and second brackets and have a substantially identical linkage, wherein the linkage associated with the first and second members is connected to a first end of the actuator and the linkage associated with the second and third members is connected to a second end of the actuator, such that a single operation of the actuator causes both the first and second members and the second and third members to adopt predetermined positions and locks them in those positions. Such a locking mechanism may enable multiple members (sub-frames) to be locked together to form a rigid member (frame).

As an alternative, the locking mechanism may comprise a first member (sub-frame) and a second member (sub-frame) pivotally connected together about a first axis and a locking arrangement secured to both the first and second members and offset from the first axis, the locking arrangement comprising a locking member secured in position to the first member but rotatable about an axis of rotation passing through the locking member, the locking member being held in position by the first member between two opposed surfaces fixed to the second member, the locking member in a plain perpendicular to the rotational axis having a maximum diameter in a first direction and a minimum diameter in a second direction different to the first direction, wherein the maximum diameter is substantially equal to the distance between the two opposed surfaces, the locking mechanism further comprising an actuator for rotating the locking member from a first position, where its minimum diameter extends between the two opposed surfaces letting the locking member move a limited amount from side to side between the opposed surfaces and permitting the first member to pivot a limited amount relative to the second member, and a second position where the maximum diameter of the locking member extends between the opposed surfaces substantially preventing side to side movement of the locking member between the opposed surfaces and preventing the first member pivoting relative to the second member, wherein the action of rotating the locking member from the first position to the second position forces the first and second members to rotate to a predetermined rotational position relative to each other before locking them in said position.

This provides a particularly compact and robust locking member, for with the exception of the actuator, typically a small hydraulic ram, the locking mechanism may be only a little larger than the adjacent pivot. Furthermore, the effective direct jamming of the pin between the two opposed surfaces of the one member and the very close proximity of the mounting of the pin to the second member, means that the mechanism can cope with very large forces that may be applied to it due to its closeness to the pivot.

The agricultural implement may alternatively have a frame comprising a plurality of sub-frames with adjacent sub-frames connected to each other at at least two pivots, each pivot having a pivot axis, wherein one pivot can be rotated relative to that of the other from a first position where they have a common pivot axis, permitting the adjacent sub-frames to rotate relative to each other about the common pivot axis, to a second position where the pivot axes are not aligned, locking the adjacent sub-frames in a predetermined rotational position relative to each other. This provides a means of locking adjacent sub-frames in a set position and the action of rotating one pivot so that its rotation axis is no longer aligned with the rotation axis of the other pivot will cause the adjacent sub-frames to adopt pre-determined positions, for only in one position will it be possible for the axes not to be aligned.

Advantageously each adjacent pair of sub-frames has at least one fixed pivot between them and all the fixed pivots of the frame have substantially parallel pivot axes and all the rotational pivots are connected together so that they can be rotated together between their respective first and second positions, so that when they are in their first positions the frame may flex and when in their second positions the sub-frames are locked together preventing the frame from flexing. More preferably each sub-frame comprises a shaft running along the sub-frame, orthogonal to the pivot axis or axes, with each shaft being arranged to be rotated on an about axis parallel to the shaft, adjacent shafts being connected together by the rotatable pivots, such that rotation of one shaft about the axis parallel to the shaft rotates all the rotational pivots between their first and second positions.

The above arrangement permits a frame made up a linear array of sub-frames pivotally connected to each other, so that they may flex relative to each other, for example in the case of a frame of agricultural implement in accordance with the first aspect of the present invention, whereby rotation of the shaft may then force the sub-frames into alignment and subsequently lock them in alignment. Such a locking system may be used as an alternative or in addition to the locking mechanism previously described.

Each shaft may support one or more levelling boards wherein, when the rotational pivots are in their first positions, the levelling boards are in a forward working position and wherein, when the rotational pivots are in their second positions, the levelling boards are raised. By this arrangement raising or lowering the levelling boards may automatically lock adjacent sub-frames frames in predetermined rotational positions relative to each other.

There may further be provided an engagement mechanism for locking the frames together in a transport configuration, the engagement mechanism comprising:
a first member (first frame);
a second member (second frame) arranged to releasably engage with the first member;
a pair of spaced apart bearing elements with a gap there between attached to, or forming part of, the first member; and
a scissor mechanism attached to the second member, the scissor mechanism comprising a pair of scissor element lying in a plain and pivotally connected to each other at points remote from the ends of the scissor elements, on a pivot axis perpendicular to the plain of the scissor elements and an actuator arranged to cause the scissor elements to open and close in a scissor like manner between an extended state and a contracted state, wherein the scissor mechanism is arranged:
   to be extended to the extended state where a respective end of each of the scissor elements extends toward the first member and the scissor elements may pass partly through the gap between the bearing elements;
   to be partly contracted such that the scissor elements expand transversely to prevent withdrawal from the gap; and
   to be further contracted such that the scissor elements draw the bearing elements towards the second member and sandwich the bearing elements, acting to hold them in a fixed transverse position and a fixed longitudinal position in the plain of the scissor elements.

The engagement mechanism may be used not only to hold the two members (frames) together, but the engagement mechanism 72 may also assist with the drawing the members together, (closing the frames). Additionally, or alternatively, the engagement mechanism may assist in pushing the members (frames) apart when it is desired to separate them, in the above agricultural implements, reducing the distance required to reverse the implement in order to fully open the frames. A further advantage of the engagement mechanism 72 is that it attaches the members, or frames, together in a manner that not only holds them together, but which also locks them together both vertically and rotationally, stiffening the frame of the implement 1 in the transport configuration.

The agricultural implement may further comprise a number of frames extending across at least part of the implement and pivotal relative to each other, each sub-frame supporting a rotatable shaft extending across a plurality of frames, the shaft having a plurality of sections each with levelling boards, tines or disc harrows attached thereto, the shaft having a universally flexible joints between the sections thereof so that the shaft may flex to accommodate any pivoting movement between adjacent frames, but still permit the levelling boards, tines or disc harrows to be raised or lowered by rotation of the shaft. Preferably a section of the shaft comprises a telescopic joint to permit the shaft to extend. This aspect may be employed where rollers or presses are mounted in the frames and the shaft is located forward of the rollers or presses. This permits the frames to flex relative to each other as the presses or rollers follow the contours of the land, whilst permitting the levelling boards, tines or disc harrows to be mounted on the shaft, both ensuring they are all raised and lowered to the same extent and also reducing the number of brackets required to support the levelling boards, tines or disc harrows from the frames and/or the number of actuators required to raise and lower the levelling boards, tines or disc harrows.

A number of embodiments of an agricultural implement embodying various aspects of the invention will now be described by way of example only with reference to the accompanying figures of which:
Figure 1 is a perspective view of a first embodiment of an agricultural implement in accordance with the present invention, in a folded transport configuration;
Figure 2 is a side elevation of the implement of Figure 1;
Figure 3 is a plan view of the implement of Figure 1;
Figure 4 is a rear elevation of the implement of Figure 1;
Figure 5 is a front elevation of the implement of Figure 1;
Figure 6 is a perspective view of the implement of Figure 1 when partly opened to a working configuration;
Figure 7 is a perspective view of the implement of Figure 1, further opened towards a working configuration;
Figure 8 is a perspective view of the implement of Figure 1 in a working configuration;
Figure 9 is a perspective view corresponding to Figure 8 but to an enlarged scale;
Figure 10 is a side elevation of the implement of Figure 1 in a working configuration;
Figure 11 is a perspective view showing the locking mechanism on the implement of Figures 1 to 10 in a locked state;
Figure 12 is a front elevation of the locking mechanism of Figure 11;
Figure 13 is a perspective view of the locking mechanism of Figure 11 in an unlocked state;
Figure 14 is a front elevation of the locking mechanism of Figure 13;
Figure 15 is a perspective view of the locking mechanism of Figure 13 in an unlocked state showing the frame flexing;
Figure 16 is a front elevation of the locking mechanism of Figure 15;
Figure 17 illustrates a second embodiment of the present invention and is a perspective view corresponding to Figure 1, showing the implement of Figure 1, again in a transport configuration, but with an additional locking mechanism and levelling boards fitted;
Figure 18 is a perspective view of the implement of Figure 17 in an open working configuration;
Figure 19 is an enlarged section of Figure 18;
Figure 20 is a side elevation of the implement of Figure 18;
Figure 21 is a perspective view illustrating the additional locking mechanism employed on the implement of Figure 18, in an unlocked state;
Figure 22 is a front elevation of locking mechanism of Figure 21;
Figure 23 is a perspective view corresponding to Figure 21, but showing the locking mechanism in a locked state;
Figure 24 is a front elevation of the locking mechanism of Figure 23;
Figure 25 is a front elevation similar to that of Figure 12, but showing an alternative locking mechanism;
Figure 26 is a perspective view of a further embodiment of an agricultural implement in accordance with the present invention, similar to that of Figure 1 and again shown in a folded transport configuration;
Figure 27 is a plan view of the implement of Figure 26;
Figure 28 is an enlarged scale plan view corresponding to the inset X of Figure 27, but with the left and right hand frames at a first stage of being fastened together for transportation;
Figure 29 is a perspective view from above and to the rear, showing that portion of the implement seen in Figure 28;
Figure 30 is a rear elevation of the implement shown in Figure 28 and 29;
Figure 31 is an enlarged scale plan view corresponding to the inset X of Figure 27, but with the left and right hand frames at a second stage of being fastened together for transportation;
Figure 32 is a perspective view from above and to the rear, showing that portion of the implement as seen in Figure 31;
Figure 33 is a rear elevation of the implement shown in Figure 31 and 32;
Figure 34 is an enlarged scale plan view corresponding to the inset X of Figure 27, but with the left and right hand frames at a third stage of being fastened together for transportation;
Figure 35 is a perspective view from above and to the rear, showing that portion of the implement as seen in Figure 34;
Figure 36 is a rear elevation of the implement shown in Figure 34 and 35;
Figure 37 is an enlarged scale plan view corresponding to the inset X of Figure 27, but with the left and right hand frames at a fourth stage of being fastened together for transportation;
Figure 38 is a perspective view from above and to the rear, showing that portion of the implement as seen in Figure 37;
Figure 39 is a rear elevation of the implement shown in Figure 37 and 38;
Figure 40 is a perspective view of a further embodiment of an agricultural implement in accordance with the present invention, shown in a folded transport configuration corresponding to that of Figure 1;
Figure 41 is a side elevation of the implement of Figure 40;
Figure 42 is a plan view of the implement of Figure 40;
Figure 43 is a front elevation of the implement of Figure 40;
Figure 44 is a rear elevation of the implement of Figure 40;
Figure 45 is a front perspective view of the implement of Figure 40, when partly opened to a working configuration;
Figures 46 to 48 are sequential front perspective views showing the implement of Figure 40, further opening towards the working configuration;
Figure 49 is a front perspective view of the implement of Figure 40 in the working configuration;
   F
Figure 50 is a rear perspective view of the implement in the working configuration as shown in Figure 49;
Figure 51 is a side elevation of the implement in the working configuration of Figures 49 and 50;
Figure 52 is an enlarged scale rear perspective view of inset A of Figure 46;
Figure 53 is an enlarged scale rear perspective view corresponding to inset B of Figure 47;
Figure 54 is an enlarged scale rear perspective view of the locking mechanism seen in inset C of Figure 50, but with the levelling boards of Figure 50 omitted for clarity;
Figure 55 is a front elevation of the locking mechanism of Figure 54 in an unlocked state;
Figure 56 is a front elevation showing the locking mechanism of Figure 55 in a locked state;
Figures 57 is an enlarged underneath view of the implement of Figure 40, in a partly deployed state, illustrating how the wheels of the implement may be steered;
Figure 58 is an underneath view of the implement of Figure 40, in a transport configuration, illustrating how the wheels of the implement may be steered; and
Figure 59 illustrates one of the steering mechanisms of the implement of Figure 40.

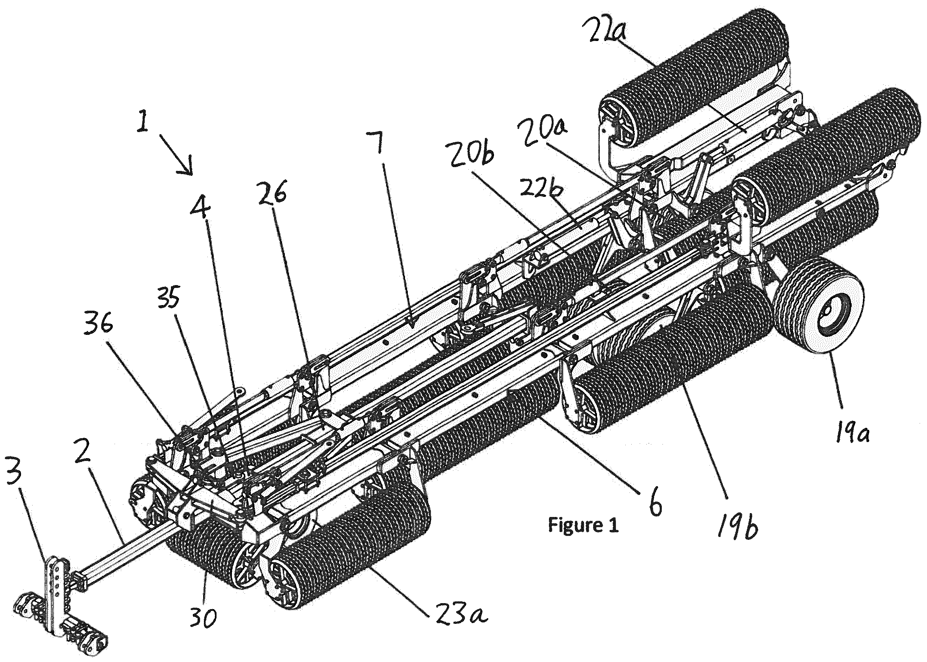

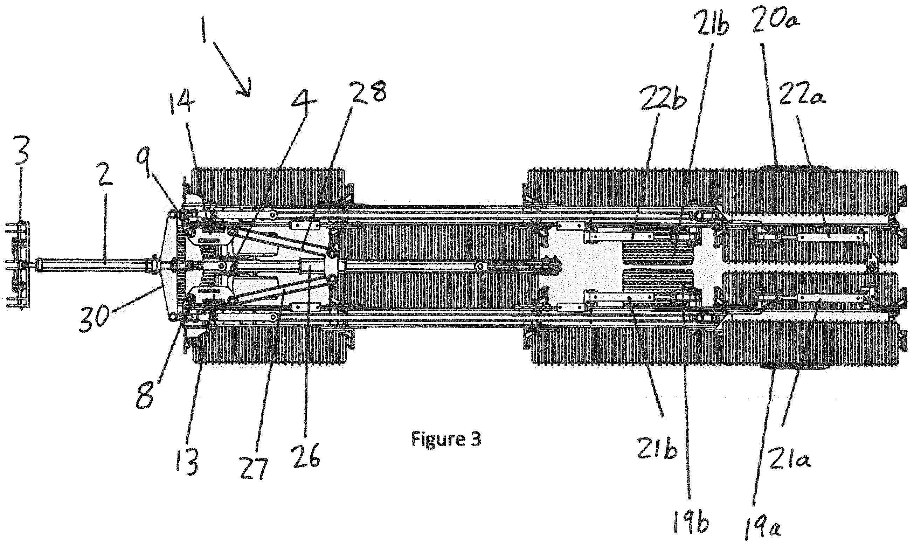

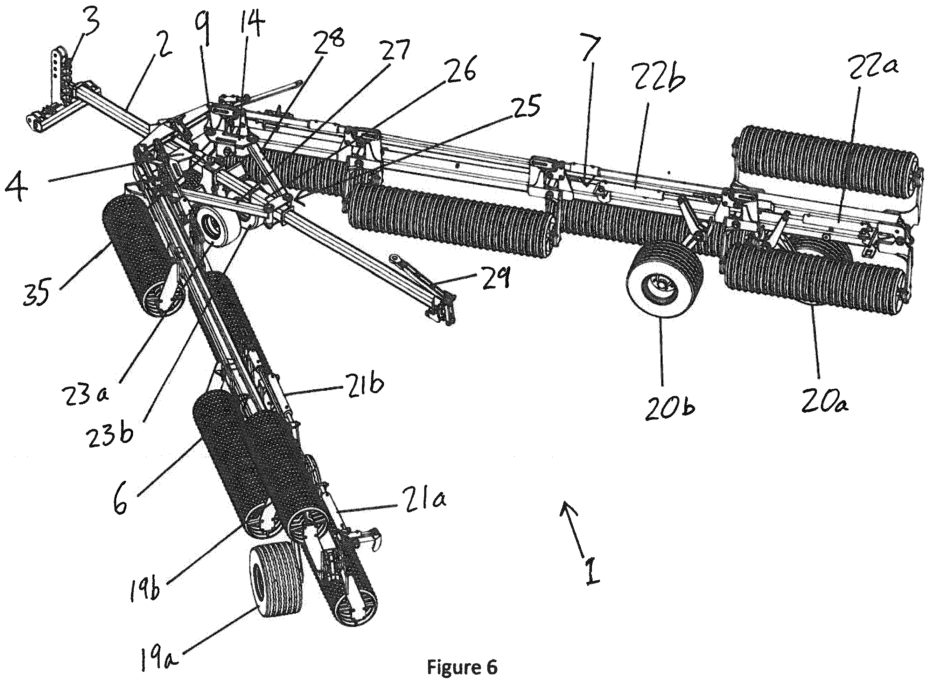

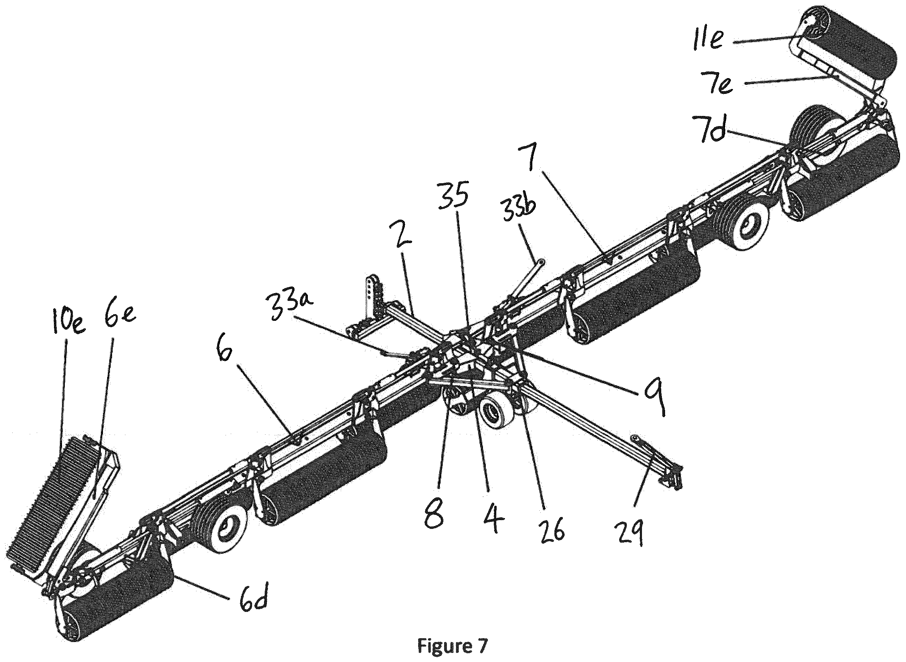

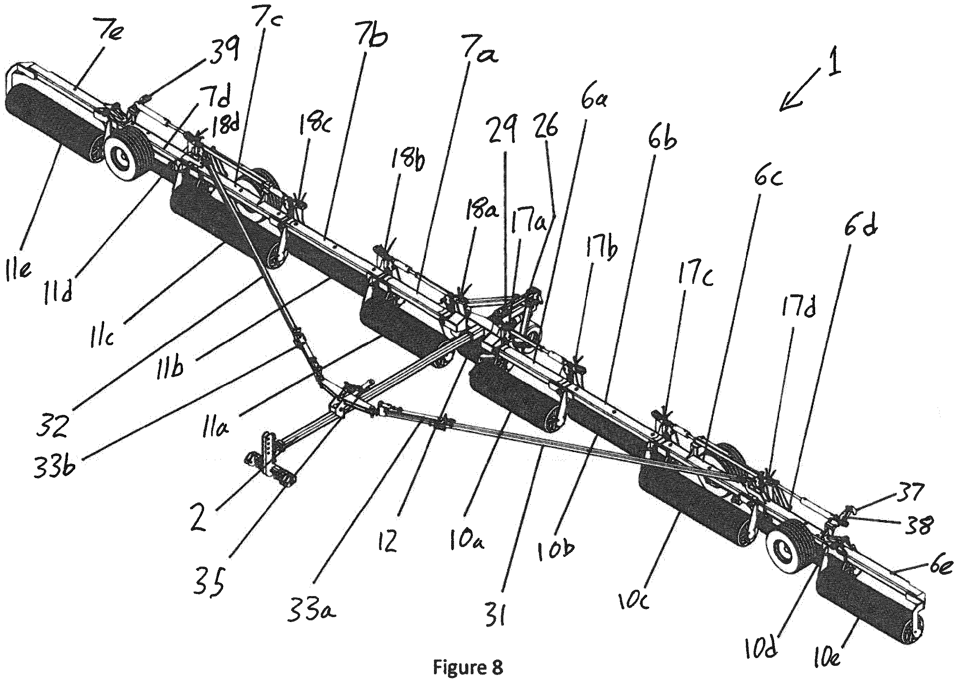

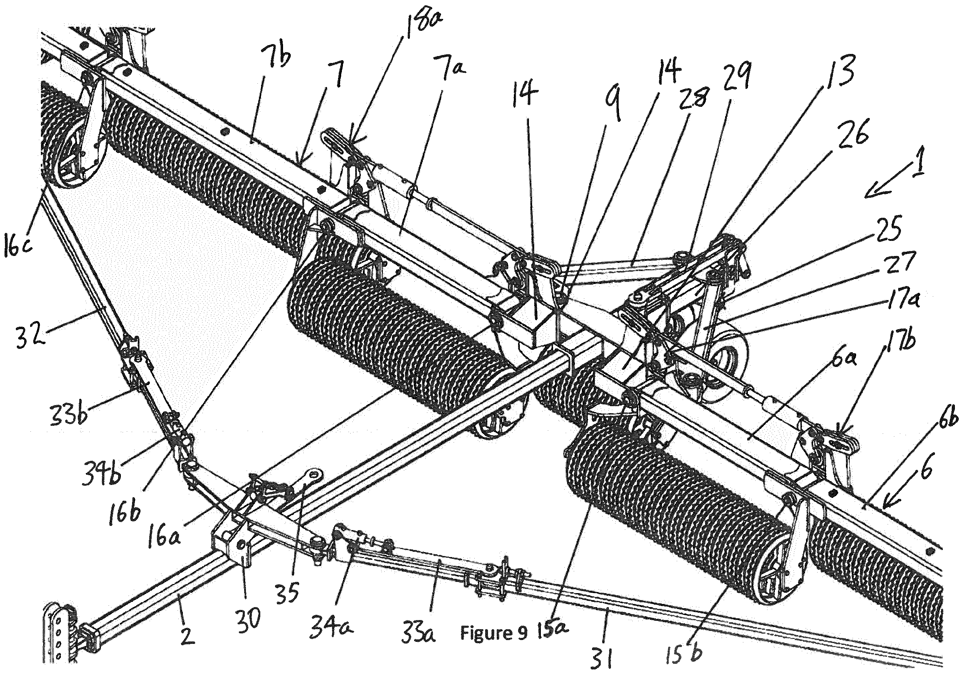

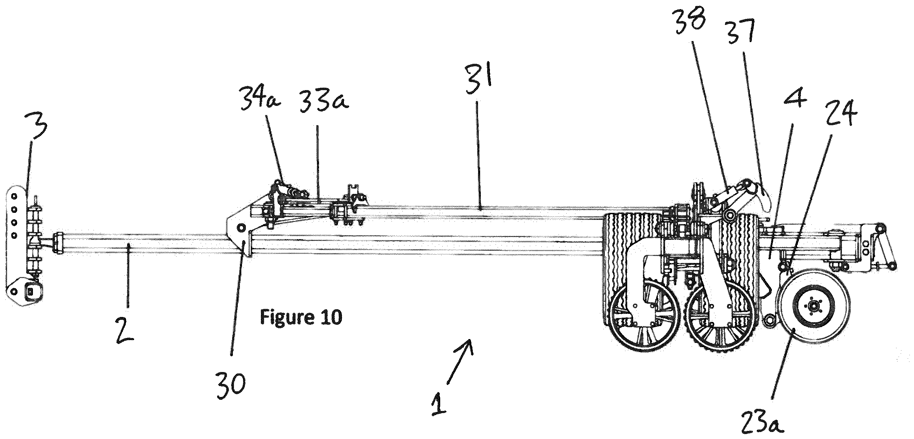

Referring now to Figures 1 to 5, these show an agricultural implement in accordance with the present invention in a folded configuration. In the further perspective views of Figures 6 to 9, the same implement in shown in part open configuration (Figure 6), an open configuration (Figure 7) and a working configuration (Figure 8 (shown to an enlarged scale in Figure 9)). Figure 10 shows the implement in the working configuration of Figure 8, but in side elevation.

With reference to all of Figures 1 to 10 and particularly Figures 8 and 9, the implement indicated generally as 1 comprises a box section drawbar 2 having a three point linkage 3 at the front end and a carriage 4 having a box section member 5 coaxially mounted on the drawbar 2, which can slide and backwards and forwards along the drawbar 2. As seen from Figure 9, the carriage 4 forms a central section of a frame which further comprises a left hand frame 6 and a right hand frame 7 pivotally mounted to the carriage 4 by respective left and right vertical pivots 8 and 9 (seen in Figure 7).

The left hand frame 6 comprises sub-frames 6a to 6e and the right hand frame 7 comprises sub-frames 7a to 7e. Each of the sub-frames 6a to 7e supports a respective axle (not shown) on which is mounted a respective press 10a to 11e. An additional central press 12 is mounted to the carriage 4.

As seen from Figure 9, the proximal ends of each of the left hand and right frames 6 and 7 each have a respective termination member 13, 14 which is pivotally connected on one side to a respective one of the vertical pivots 8, 9 and which is also connected to a respective sub-frame horizontal pivot 15a, 16a.

The sub-frame pivots 15a and 16a are the inner most of a series of horizontal pivots 15a to 16e which pivotally connect adjacent sub-frames 6a to 7e together, permitting all the presses 10a to 12, to follow the contours of the land when the implement is in use in the working configuration, illustrated in Figures 8 and 9.

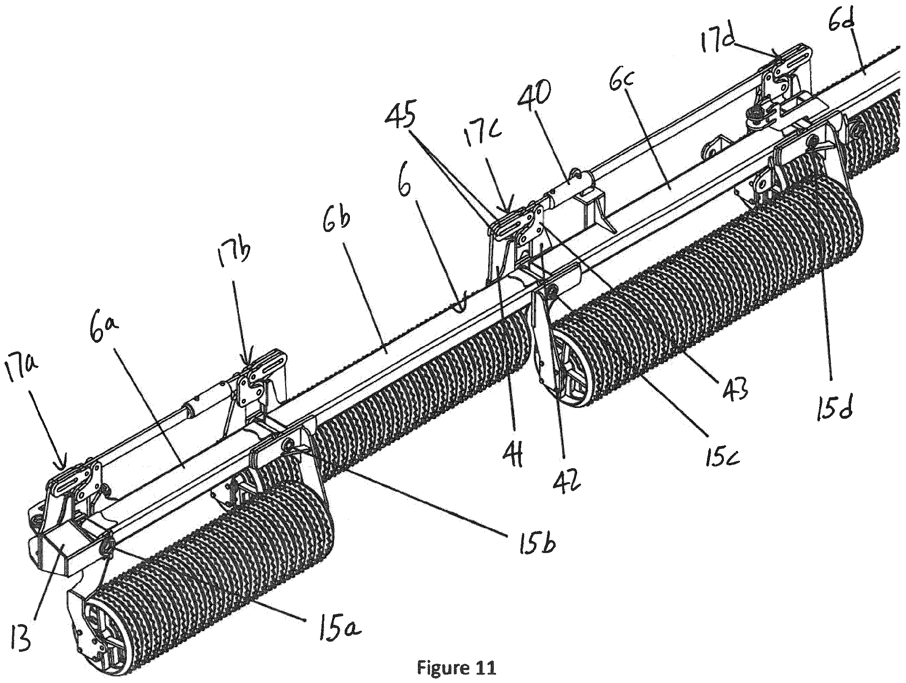

Each of the sub-frames 6a to 6d and 7a to 7d has a respective locking mechanism 17a to 18d, which are described below in greater detail with reference to Figures 11 to 16. These locking mechanisms, when actuated, align respective adjacent sub-frames 6a to 7e, and in the case of locking mechanisms 17a and 18a, lock inner sub-frames 6a, 7a horizontally in position relative to the termination members 13 and 14 respectively and thus to the carriage 4.

As seen from Figure 7, distal sub-frames 6e and 7e, together with the respective presses 10e and 11e may be raised to, or lowered from, a transport configuration where they are folded inverted on top of respective adjacent sub-frames 6d and 7d. This is achieved by means of hydraulic rams (not shown) housed within the box section of the sub-frames 6d and 7d. These hydraulic rams are set to be free floating when in the working configuration of Figures 8 and 9.

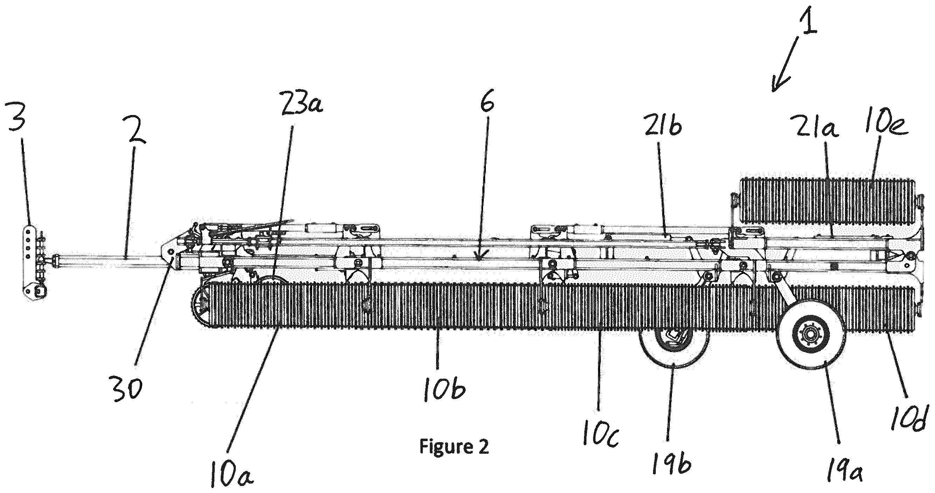

As seen from Figure 6, each of the left hand and right hand frames 6 and 7 has a respective pair of transport wheels 19a, 19b and 20a, 20b. These transport wheels can be raised and lower by respective hydraulic rams 21a, 21b and 22a, 22b. When the transport wheels 19a to 20b are lowered raising the frames and presses 10a to 11e to the transport configuration of Figure 2, the respective pairs of hydraulic rams 21a and 21b and 22a and 22b are hydraulically linked. Thus whilst maintaining the frames 6 and 7 in the raised transport configuration, respective pairs of wheels 19a, 19b and 20a and 20b may raise and lower relative to each other, to permit the wheels to share an equal load as they pass over undulations in the ground, in the same manner as a rear twin rear axle on a lorry pivots to maintain a substantially equal load on the rear wheels. However, the pairs of hydraulic rams 21a, 21b and 22a, 22b may be hydraulically isolated when the implement 1 is opened from the transport configuration shown in Figures 1 to the working configuration shown in Figure 8, to avoid one of the wheels "digging in".

As seen from Figures 6 and 10, an auxiliary pair of transport wheels 23a and 23b is mounted to the carriage 4. These may be raised or lowered by hydraulic ram 24 (see Figure 10). These auxiliary transport wheels 23a and 23b will only be required in certain applications, for example where it is required to store the implement in a transport configuration as illustrated in Figure 1, with the presses 10a to 11e and the central press 12 raised clear of the ground, or when it is desired when opening or closing the implement between the transport configuration and the working configuration to raise the central press 12 or reduce the weight on the central press 12.

As seen from Figures 6 and 9, mounted on the drawbar 2 behind the carriage 4 there is a synchronisation linkage indicated generally as 25. This comprises a runner 27, slideable on the drawbar, with arms 28 and 29 each pivotally connected at a first end to the runner 27 and pivotally connected at a second end to respective termination members 13 and 14 of respective frames 6 and 7. This synchronisation linkage 25 ensures the arms 6 and 7 open and close in synchronisation.

At the distal end of the drawbar 2 there is provided a latching member 29 which, when in the working configuration shown in Figure 9, engages with the carriage 4, retaining carriage 4 towards the rear of the drawbar 2, sandwiching the runner 26 there between and thus locking the frames 6 and 7 in their working configurations, where they extend orthogonally from the drawbar 2.

With reference to Figure 9, fixed to the drawbar 2 towards the front thereof is a bracket 30. This is pivotally attached to respective telescopic restraining arms 31 and 32, extending to respective frames 6 and 7. Each of the restraining arms 31 and 32, when the implement 1 is in the working configuration, as shown in Figure 9, may be locked in an extended state by means of respective latching members 33a, 33b, operated by respective hydraulic rams 34a and 34b. In this configuration the restraining arms 31 and 32 also lock the frames 6 and 7 in the orthogonal working position of Figure 9.

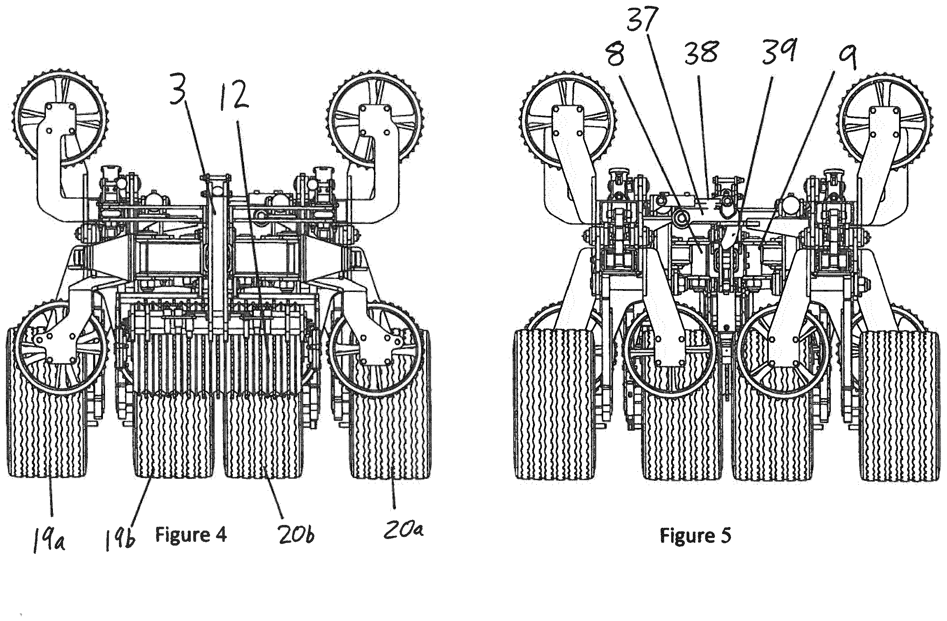

With continued reference to Figure 9, a further latching member 35 is seen extending from the bracket 30 and this is operated by hydraulic ram 36. When the implement 1 is in the folded transport configuration of Figure 1, the latching member 35 engages with the carriage 4, to retain the carriage 4 in a forward position as illustrated in Figure 1. As can perhaps be most clearly seen from Figure 8, a hook 37 operated by hydraulic ram 38 is provided at the distal end of the sub-frame 6d which, when the implement 1 is in transport configuration of Figure 1, engages with staple 39, as shown in the rear elevation of Figure 5, to maintain the frames 6 and 7 in the transport configuration.

Operation of the implement 1 will now be described commencing from the transport configuration of Figures 1 to 5. Here the transport wheels 19a to 20b are initially in a lowered position with the frames 6 and 7 raised and the presses 10a to 10d and 11a to 11d raised clear of the ground and, with the distal sub-frames 6e and 7e and respective presses 10e, 11e flipped over above the adjacent sub-frames 10d, 11d, to shorten the length of the frames 6 and 7 and thus the length of the implement 1 when being transported. Carriage 4 is latched by latching member 35 in place towards the front of the drawbar 2, with only a short length of the drawbar 2 protruding forward of the carriage 4, this length being sufficient only to enable clearance of the rear wheels of the tractor (not shown) when turning. The auxiliary transport wheels 23a, 23b are also raised so that the implement 1 is supported entirely by the transport wheels 19a to 20b and the three point linkage 3 attached to the tractor (not shown). This is possible by virtue of the sub-frames 6 and 7 being retained in a horizontally aligned position by the locking mechanisms 17a to 18d.

When it is desired to deploy the implement 1 to the working configuration the hook 37 is disengaged from the staple 39, and the implement 1 is reversed, causing the frames 6 and 7 to open, as shown in Figure 6, until they reach the open configuration shown in Figure 7. Here the frames 6 and 7 are still substantially supported by transport wheels 19a to 20b, which during this manoeuvre are locked in position by isolation of the respective hydraulic rams 21a, 21b and 22a, 22b.

The sub-frames 6e and 7e are then unfolded from the transport configuration to their working configuration where their respective presses 10e and 11e are in contact with the ground. In the configuration shown in Figure 7, the latching member 35 is raised releasing the carriage 4 from the bracket 30, whereupon the drawbar is then drawn forward by the tractor (not shown) to the working configuration shown in Figure 8. Here the latching member 29 on the rear of the drawbar 2 engages with the carriage 4, sandwiching the runner 26 of the synchronisation linkage 25 between the distal end of the drawbar 2 and the carriage 4, thus locking the carriage 4 and the synchronisation linkage 25 in the position shown. The latching means 33a and 33b are then operated to lock the now extended restraining bars 31 and 32 in the position shown in Figure 8. The locking mechanisms 17a to 17d are then released permitting the frames 7 and 8 to flex in use and the presses 10a to 12 to follow the contours of the land.

When it is desired to return the implement 1 to the transport configuration the procedure is reversed. First the locking mechanisms 17a to 18d, described in more detail below, are operated to bring the sub-frames 6a to 6d and 7a to 7d and the central frame section in the form of carriage 4 into horizontal alignment and to then lock them in place. The distal sub-frames 6e and 7e are then raised and the transport wheels 19a to 20b lowered to raise the frames and the presses 10a to 12. The latching member 29 is then released together with latching members 33a and 33b on the restraining arms 31 and 32, permitting the drawbar 2 to be reversed through the carriage 4 to the position indicated in Figure 7. Here the latching member 35 engages with the carriage 4 locking it in the forward position of Figures 1 to 5. The implement 1 is then towed forward, causing the frames 6 and 7 to close together, as shown in Figure 6, until they reach the configuration shown in Figures 1 to 5, where the hook 38 engages with the staple 39, again locking the implement in the transport configuration.

Referring now to Figures 11 to 16, there is illustrated, in various stages of operation, the locking mechanisms 17a to 17b illustrated in Figure 8 and to an enlarged scale in Figure 9. In Figure 11, at the left hand side, is shown the termination member 13 of the left hand frame 6, which termination member 13 is pivotally connected to the carriage 4 (not shown) by the left hand vertical pivot 8 (also not shown in Figure 11 but which can be seen in Figure 7). Termination member 13 is pivotally connected to sub-frame 6a by horizontal pivot 15a, with the sub-frame 6a being pivotally connected at its distal end by pivot 15b to proximal end of sub-frame 6b. Sub-frame 6b is in turn pivotally connected by pivot 15c to sub-frame 6c, in turn pivotally connected by pivot 15d to sub-frame 6d. All the locking mechanisms 17a to 18d of Figure 8 are essentially identical but, as can be seen from Figure 11, associated pairs of locking mechanisms, for example those of 17c and 17d, are arranged in a back to back configuration and are actuated by a common hydraulic ram, which in the case of locking mechanisms 17c and 17d is the hydraulic ram 40. As all the locking mechanisms 17a to 18d are essentially the same, including the locking mechanisms 17a and 18a, acting between the first sub-frame and the carriage, the operation of these will now be described with reference only to the locking mechanism 17c.

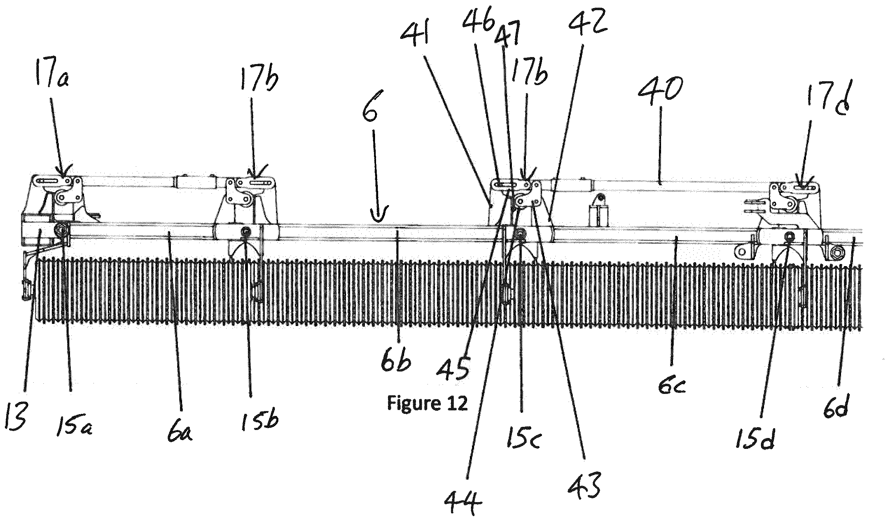

In Figures 11 and 12 the locking mechanism 17c is seen to comprise a first bracket 41 extending from the sub-frame 6b and a second bracket 42 extending from the sub-frame 6c. To the bracket 42 there is pivotally connected an L-shaped arm 43, which is pivotally connected at a first end to one end of hydraulic ram 40 and at its other end end carries a roller 44. The linkage mechanism 17c additionally comprises a pair of slotted plates 45, attached at one end to the end of the ram 40 and with the slots therein engaging a pin 46 extending through the bracket 41.

In the locked state, shown in Figures 11 and 12, the hydraulic ram 40 is fully contracted, urging the L-shaped arm 43 clockwise, as the opposite end of the ram 40 urges a corresponding arm of associated locking mechanism 17d in anticlockwise direction. In this position the roller 44 of linkage mechanism 17c is pressed hard against bearing surface 47 of bracket 41 with the pin 46 also attached to the bracket 41, which pin forms a second bearing surface against the end of the slotted plates 45, being retained in place by the slots in the slotted plates 45, such that the bracket 41 on the sub-frame 6b is retained in place relative to the bracket 42 on the sub-frame 6c. Thus operation of the hydraulic ram 40 forces each of the sub-frames 6b, 6c and 6d into horizontal alignment, as shown, and locks the sub-frames 6b to 6d in that horizontal position.

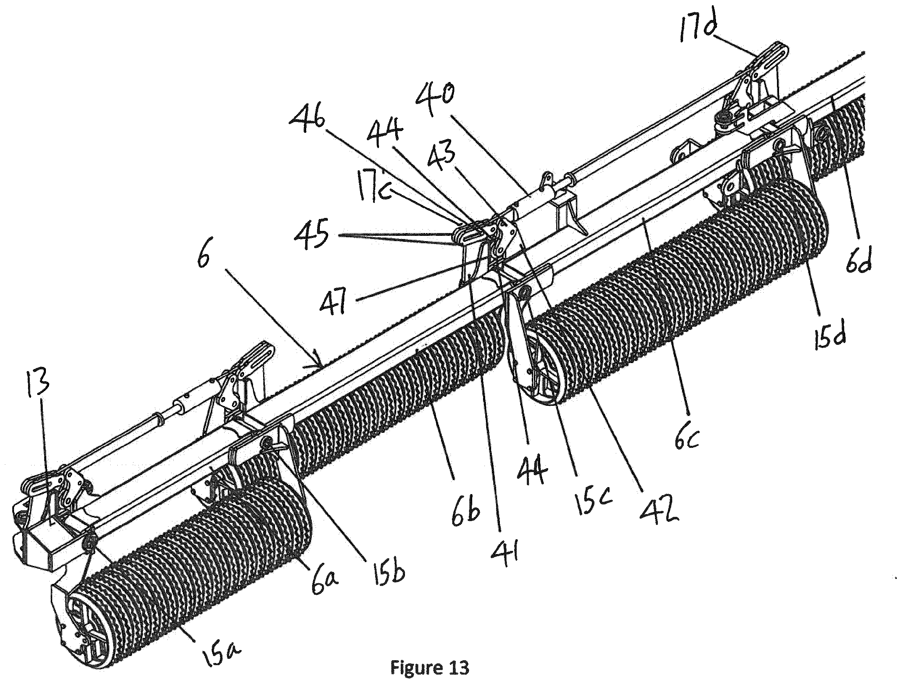

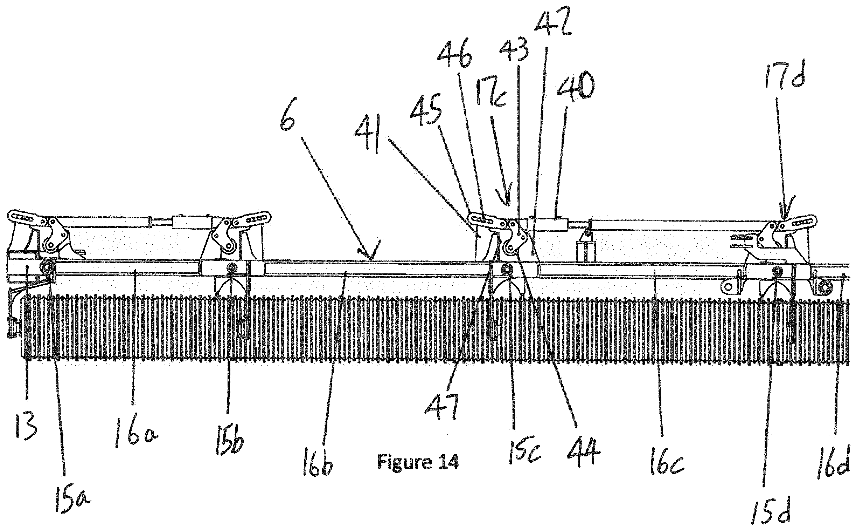

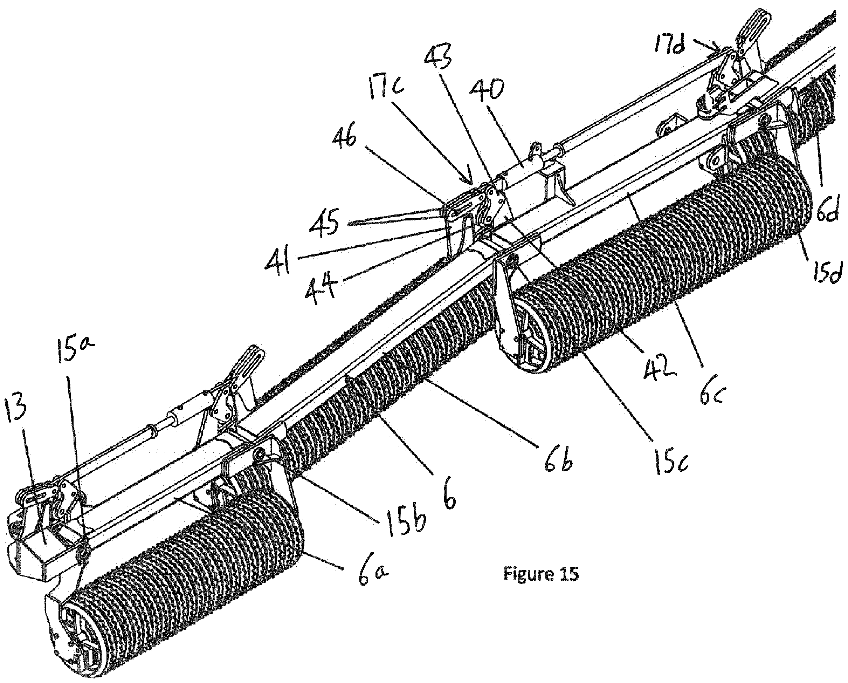

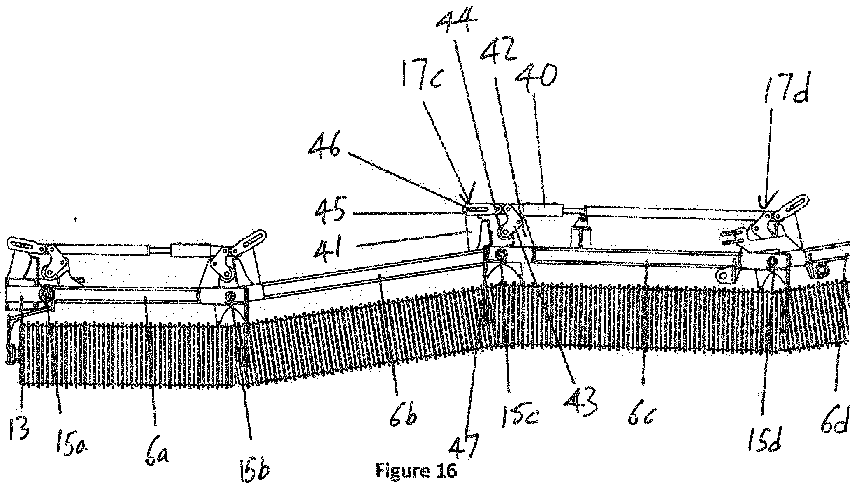

When it is desired that the sub-frames 6b to 6d be free floating then, as shown in Figures 13 and 14, the hydraulic ram 40 is extended so that the roller 44 disengages the bearing surface 47 and so that the pin 46 is free to travel backwards and forwards in slots in the plates 45, as is most clearly seen in Figure 14. This permits the frame 6 to flex by the sub-frames 6b, 6c and 6d being allowed to pivot relative to one another, as shown in Figures 15 and 16. From the unlocked configuration shown in Figures 15 and 16, actuation of hydraulic ram 40 will again force the sub-frames 6b to 6d into horizontal alignment, as shown in Figures 11 and 12.

The linkage mechanism described above is particularly applicable to the agricultural implement of the present embodiment, but may have many applications.

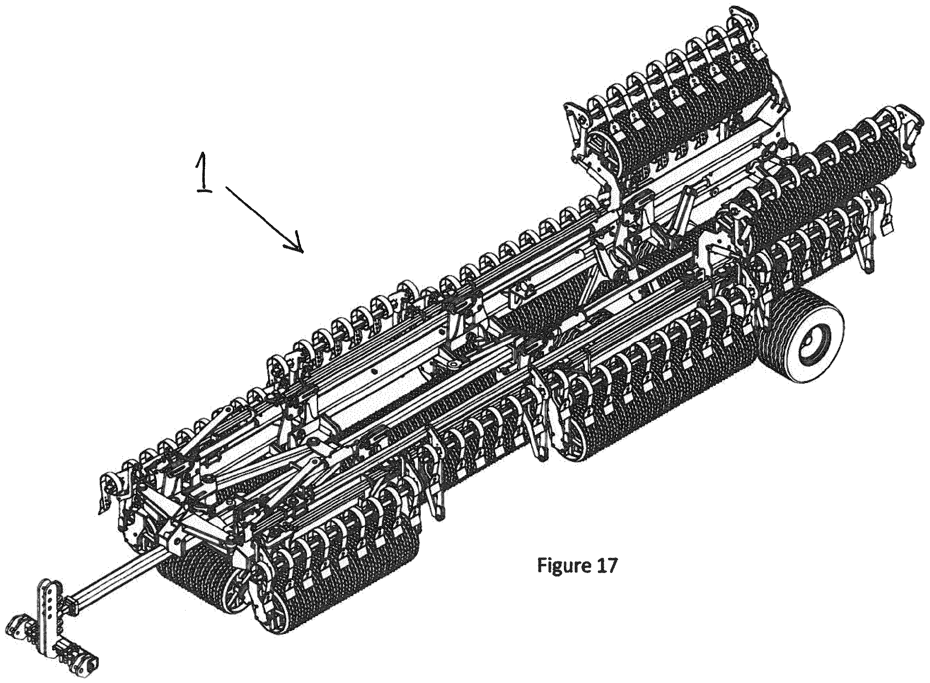

Referring now to Figures 17 to 23, there is shown the implement previously described with reference to Figures 1 to 16, but additionally comprising an auxiliary locking mechanism and levelling boards. These are optional features and were omitted from Figures 1 to 16 for clarity. It is to be noted that the auxiliary locking mechanism to be described below could, in a further alternative embodiment, be an alternative locking mechanism for the locking mechanisms 17a to 18d previously described. Also, as with the previous locking mechanisms, the auxiliary locking mechanism described below may have applications other than to the agricultural implement 1.

In the following description of Figures 17 to 23, reference is not made to components already described with reference to Figures 1 to 16. Nor is reference made to the operation of the implement insofar as the implement operates in the manner previously described with reference to Figures 1 to 16. However, where it is necessary to refer to previously described components then the previously used numbering is adhered to.

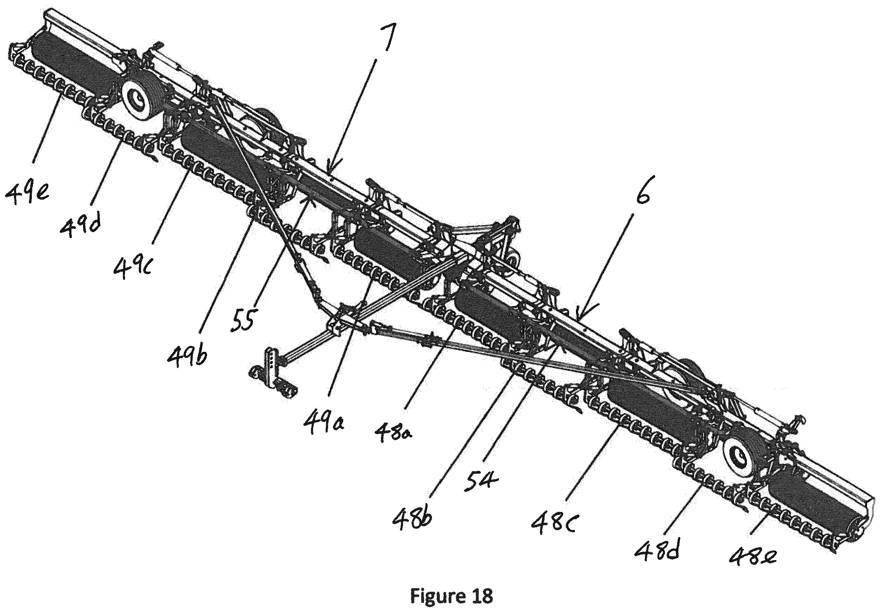

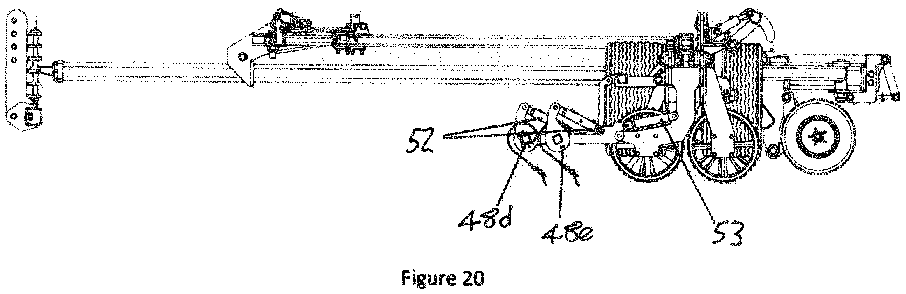

Referring to Figure 17, this a perspective view of the implement indicated generally as 1 and this corresponds to the perspective view of Figure 1, showing the implement in a transport configuration and showing levelling boards 48a to 49e fitted, which are labelled and can be more clearly seen in Figure 18, showing the implement 1 in the working configuration. Some of these can also be seen in the side elevation of Figure 20.

As can be seen from Figure 20, the left hand distal levelling board 48e is attached to the sub-frame 6e. This levelling board 48e is stored for transport by hydraulic ram 53 pushing the levelling board 48e downwards as shown in Figure 20, but this operation will not be commenced until the sub-frame 6e is inverted in the transport configuration, so that it is above adjacent sub-frame 6d. The same applies to the distal levelling 49e on the opposite side of the implement 1.

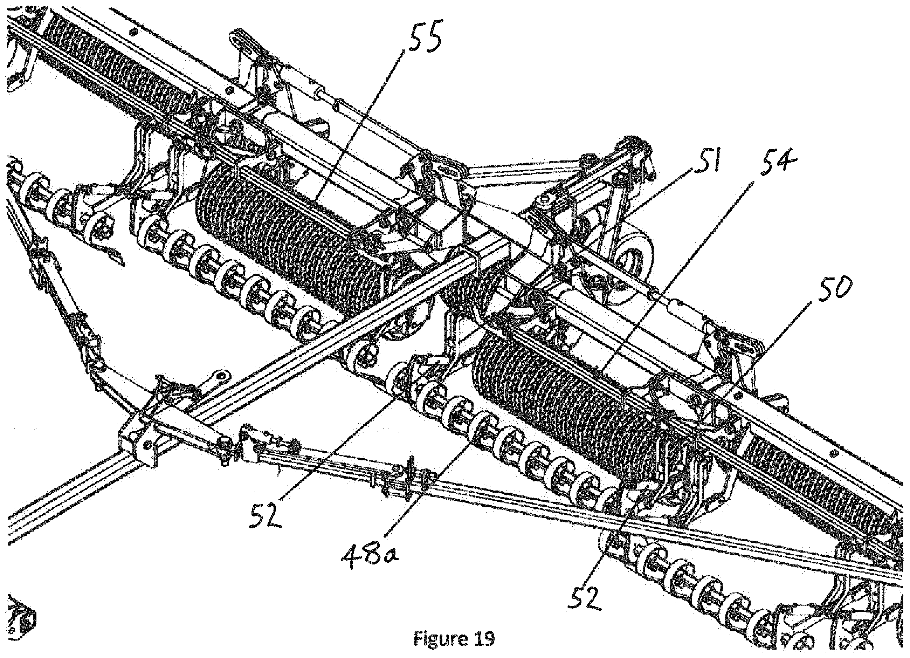

With the exception of the levelling boards 48e and 49e, the remainder of the levelling boards 48a to 48d and 49a to 49d are suspended by respective arms 51 and 52 from respective shafts 54 and 55, as can be seen from Figure 19 where levelling board 48a is shown to an enlarged scale. The working angle of all the levelling boards are set by respective pairs of rams 52. To raise the levelling boards 48a to 48d and 49a to 49d respective shafts 54 and 55 are rotated to raise respective pairs of arms 50 and 51.

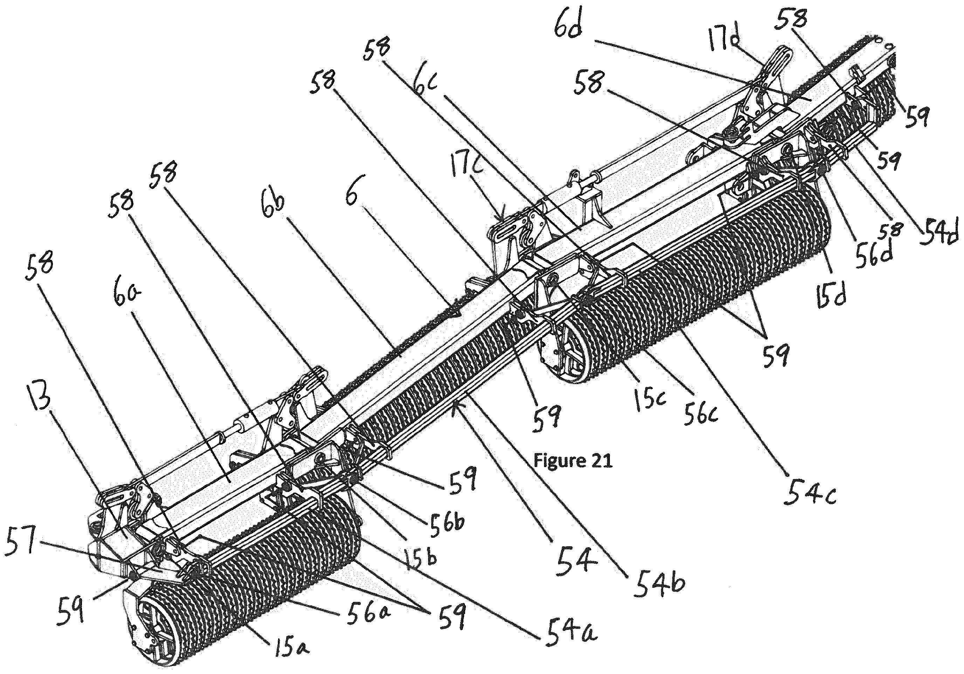

One of the shafts 54 can be seen in greater detail in Figures 21 to 24, from which the levelling boards 48a to 48d have been omitted for clarity, together with the respective pairs of arms 50, 51.

As can be seen in Figure 21, the shaft 54 comprises four components 54a to 54d. Each of the components 54a and 54d of the shaft 54 are pivotally connected to each other by pivots by 56a to 56d with component 54a being connected by pivot 56a to plate 57 mounted on the termination member 13 of the left hand arm 6, which termination member 13 is mounted on the carriage 4 (not shown) by the vertical pivot 8 (not shown).

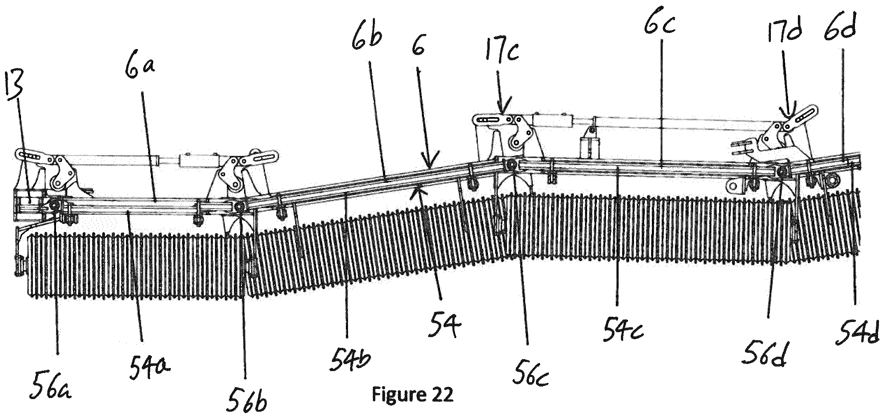

In the "unlocked" configuration of Figures 21 and 22, each of pivots 56a to 56d lies on the same rotational axis as the sub-frame horizontal pivots 15a to 15d, permitting the sub-frames 6a to 6d to freely flex as previously described.

As can be seen from Figure 21, the shaft 54 is suspended by plate 57 and by brackets 58. The plate 57 and all the brackets 58 are connected by pivots 59 to respective ones of the termination member 13 and sub-frames 6a to 6d, but unless the sub-frames 6a to 6d are aligned, the pivots 59 do not have a common rotational axis.

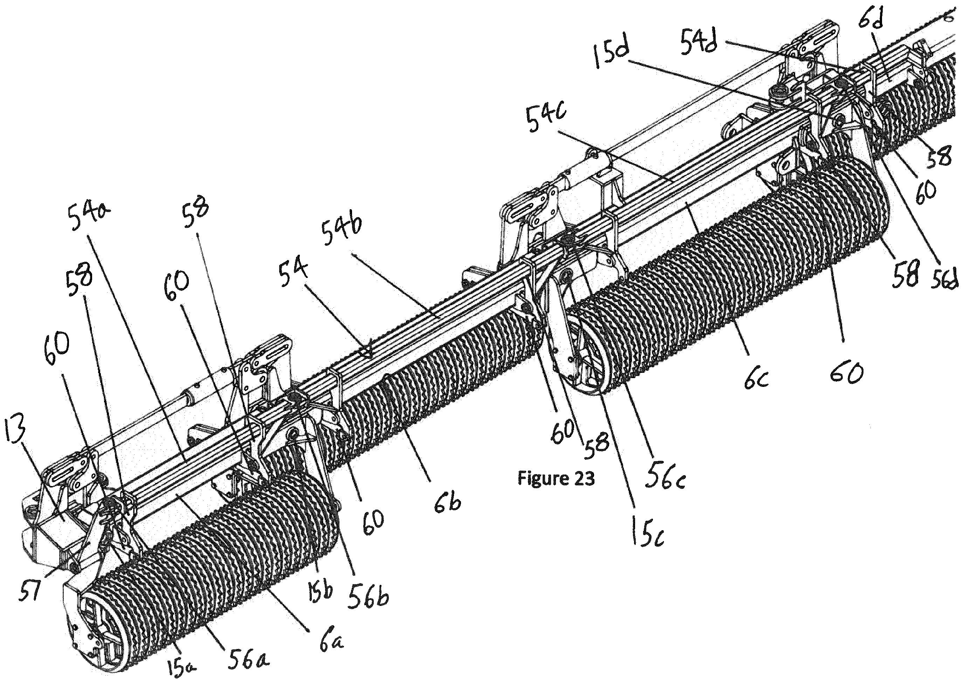

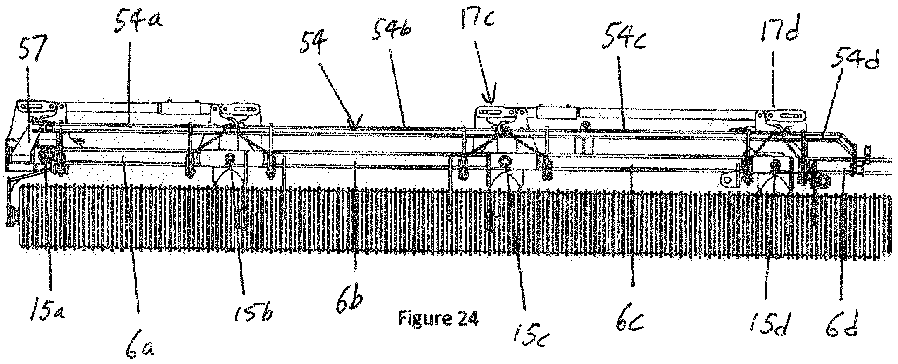

When the previously described locking mechanism 17a to 17d has been actuated to bring the sub-frames 6a to 6d into alignment, as shown in Figure 23, the shaft 54 may be then be raised by being rotated about the then common rotational axis of pivots 59, and raised to the position shown in Figure 23 by hydraulic rams 60 acting on the brackets 58. It will be appreciated from Figures 23 and 24 that in this configuration the shaft 54 will prevent flexing of the sub-frames, as the rotational axes of the pivots 56a to 56d are no longer aligned with the horizontal sub-frame pivots 15a to 15d. Thus the shaft 54, as illustrated in Figures 21 to 24, provides an auxiliary locking mechanism in the illustrated embodiment. Thus when levelling boards are attached to the shaft 54, the action of the rams 60 raising the levelling boards causes the shaft 54 to act as an auxiliary locking mechanism, locking the sub-frames 6a to 6d in the horizontal configuration of Figure 23.

The auxiliary locking mechanism of the shaft 54 greatly increases the rigidity of frame 6 when in the transport configuration and therefore it can be desirable to employ this auxiliary locking mechanism even when levelling boards 48a to 49e are not required. The auxiliary locking mechanism will also act to align sub-frames and may in certain applications be used as an alternative to the locking mechanisms 17a to 18d. In addition the auxiliary locking mechanism just described, comprising two sets of pivots which in an unlocked state share a common axis but in a locked state do not share common axis, may have other applications particularly, but not exclusively, to agricultural implements.

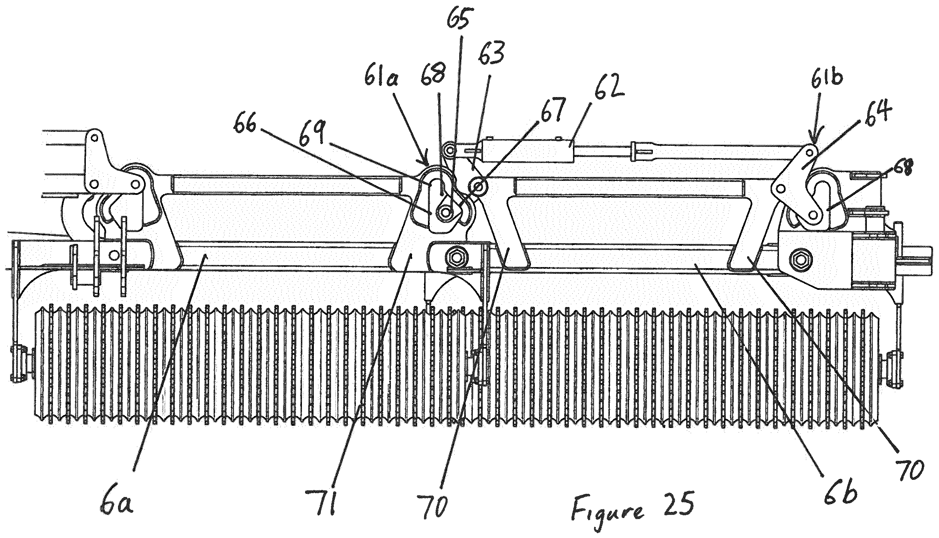

Referring to Figure 25, there is illustrated an alternative locking mechanism to that shown in Figure 12. In the Figure 25 embodiment the locking mechanisms, indicated generally as 61a and 61b, are actuated by a common hydraulic ram 62, the respective ends of which act upon L - shaped arm 63, 64 of the locking mechanisms 63, 64. Each L - shaped arm 63, 64 is pivotally connected to a respective bracket 70 attached to a respective end of sub-frame 6b. The L - shaped arms 63, 64 each have a respective roller 65 (only one of which can be seen) at a distal end, which rollers 65, on actuation and contraction of the hydraulic ram 62, engages with one or other of the tapered sides 66, 67 of respective tapered slot 68.

With reference to the locking mechanism 61a, the tapered slot 68 is formed in a bracket 17 attached to the adjacent sub-frame 6a. In use, as the hydraulic ram 62 contracts, the roller 65 prescribes an upward arc, acting on one of the tapered sides 66, 67 of tapered slot 68, forcing the sub-frame 6a and 6b into alignment, as shown in Figure 25, until the roller 65 enters the narrow portion 69 of the tapered slot 68.

When the roller 65 is in the narrow portion 69 of tapered slot 68, it retains the sub-frames 6a and 6b in the aligned position shown in Figure 25. An advantage of the arrangement shown in Figure 25, over that shown in Figure 12, is that any forces applied on the locking mechanism 61a, due to the sub-frames 6a and 6b tending to arch or sag, are transmitted between the sub-frames 6a and 6b by the L shaped arm 63 alone and do not place any force on the hydraulic ram 62. Thus the hydraulic ram 62 only needs to retain the roller 65 in the narrow potion 69 of the tapered slot 68

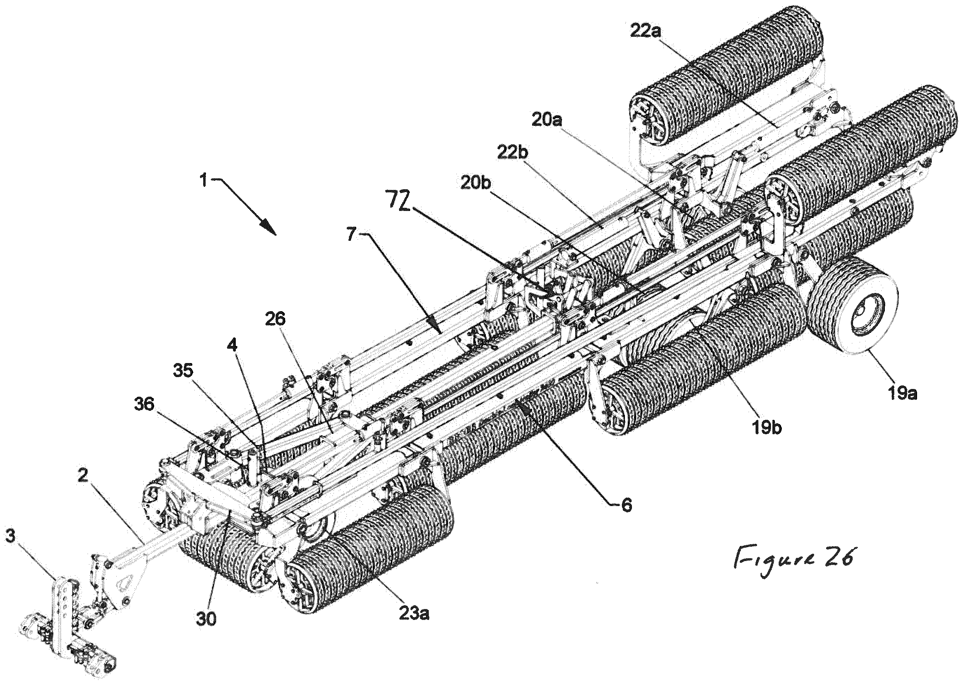

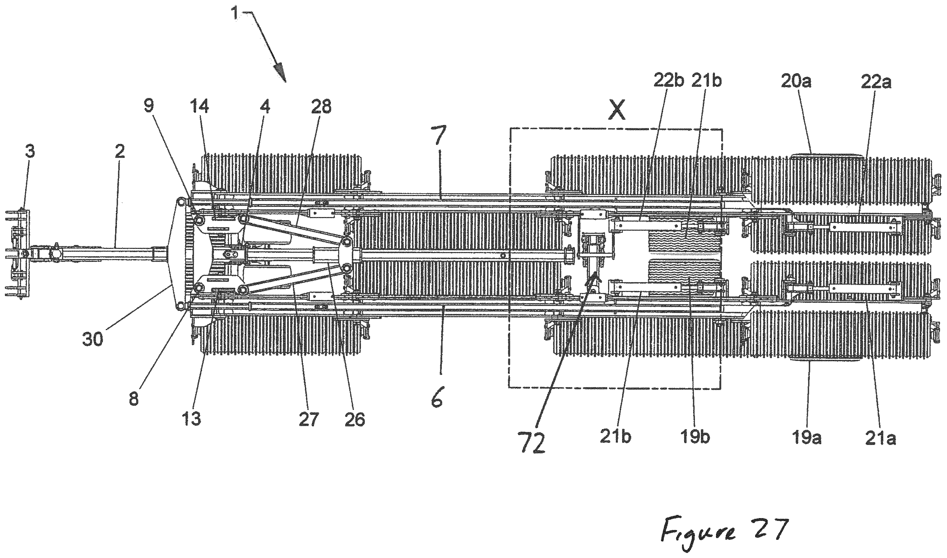

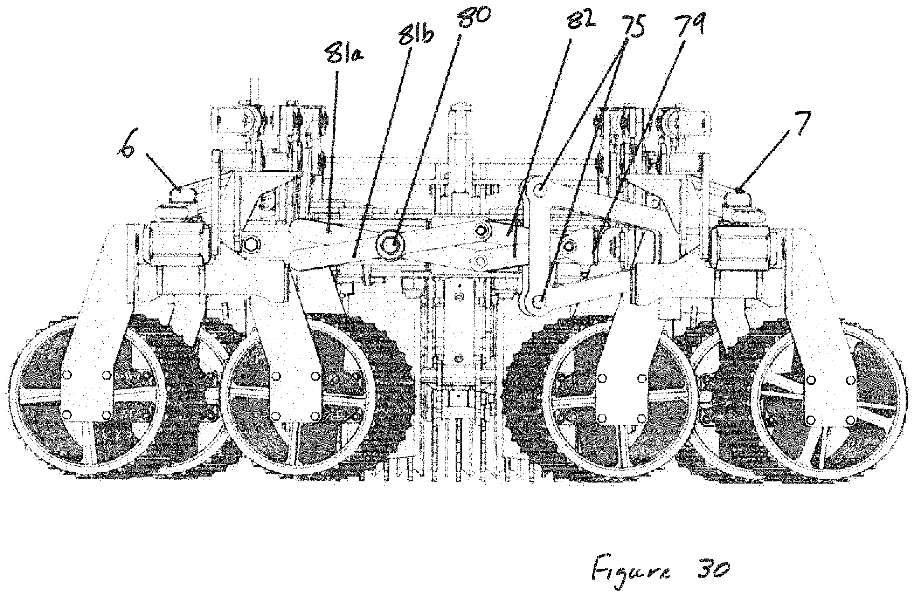

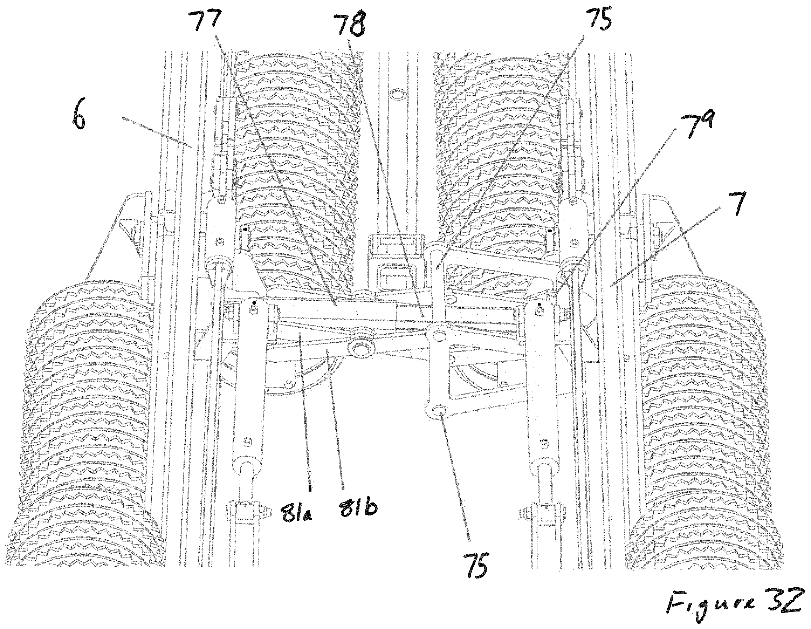

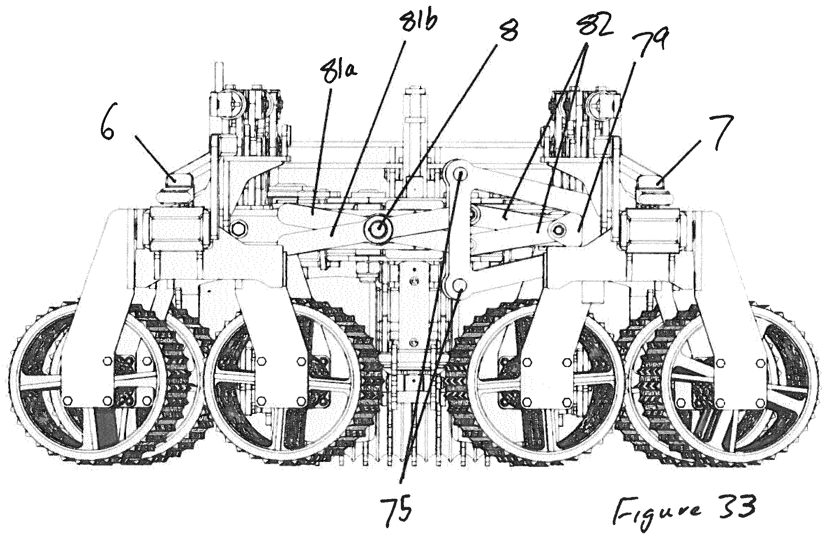

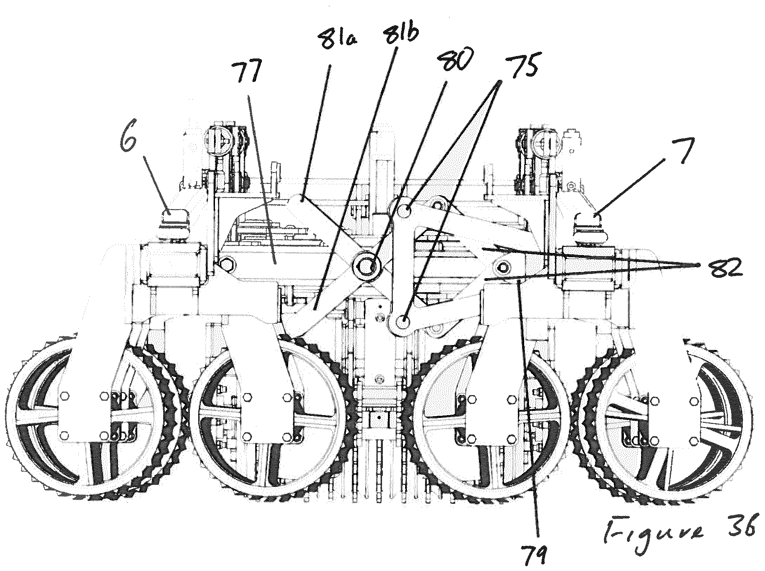

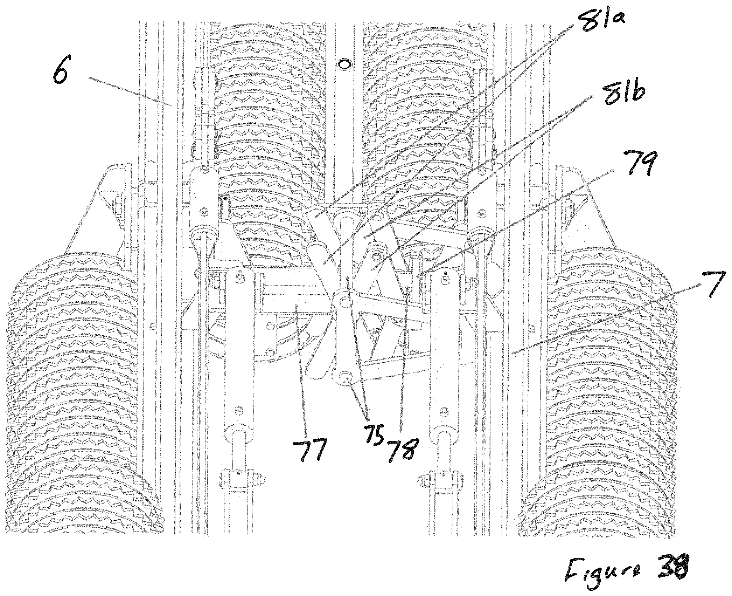

Referring now to Figure 26 there is shown an implement similar to that illustrated in Figure 21 and like numerals are used to indicate like parts. The only difference between the embodiment of Figure 26 and that of Figure 1 (and Figure 5) is that, in the Figure 26 embodiment, the hook 37 hydraulic ram 38 and staple 39 of the embodiment of Figure 1 (see Figure 5), used to lock the left hand frame 6 to the right hand frame 7 in the closed transport configuration, have been omitted. Instead, in the Figure 26 embodiment, these have been replaced by an engagement mechanism, indicated generally as 72. As will be described below with reference to Figures 27 to 39, the engagement mechanism 72 permits the frames 6 and 7 to be more easily closed, for the engagement mechanism 72 may assist with the final closing of the frames 6 and 7. Additionally, or alternatively, at the commencement of opening the frames 6 and 7 the engagement mechanism 72 may assist in pushing the frames apart, reducing the distance required to reverse the implement in order to fully open the frames. A further advantage of the engagement mechanism 72 is that it attaches the left hand frame 6 to the right hand frame 7 in a manner that not only holds them together, but which also locks them together both vertically and rotationally, stiffening the frame of the implement 1 in the transport configuration.

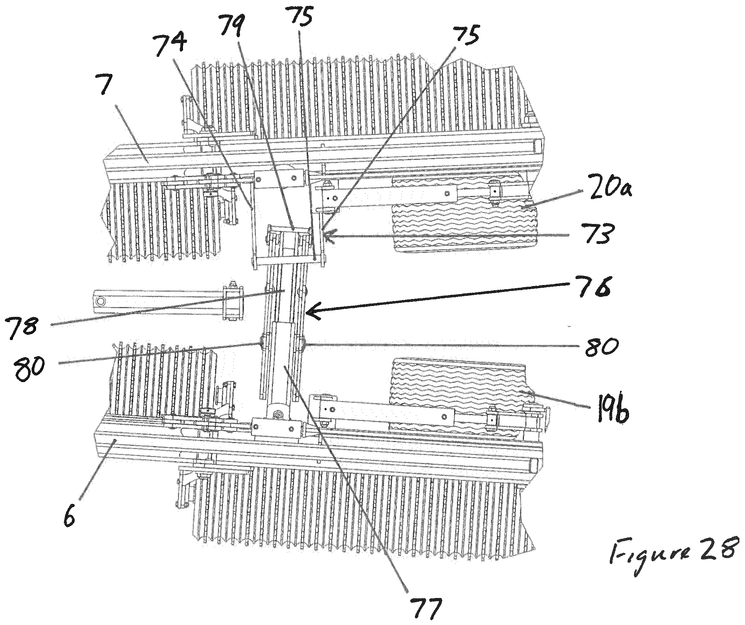

Referring now to Figure 27, the implement of Figure 26 is shown in plan view, where the engagement mechanism 72 can be seen towards the centre of inset X. The engagement mechanism 72 is shown to an enlarged scale, in Figures 28, 29 and 30 with Figure 28 an enlarged scale plan view corresponding to the inset X of Figure 27, but with the left and right hand frames 6, 7 still partly open and at a first stage of being fastened together for transportation.

As is perhaps most easily seen from Figure 28 the engagement mechanism 72 comprises a bracket, indicated as 73 attached to the frame 7. The bracket 73 comprises two side plates 74 and two locking bars 75, between which an engaging portion, indicated generally as 76, of the engagement mechanism 72 protrudes.

With reference to all of Figures 28, 29 and 30, the engaging portion 76 comprises a tubular member 77 welded to the frame 6 which tubular member 76 houses a hydraulic ram 78, the distal end of which is attached a stop plate 79. To either side of the tubular member 77 extends pivot points 80, to each of which is pivotally attached a respective pair of scissor members 81a, 81b.

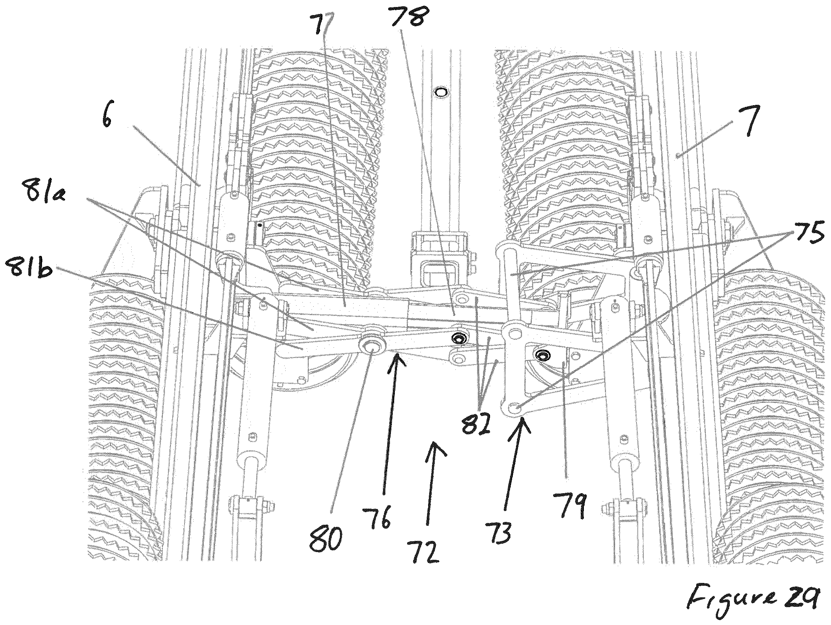

Each scissor member 81a, 81b of each respective pair of scissor members is pivotally connected at one end to a respective linkage plate 82. In this way extension of the hydraulic ram 78, causes each respective pair of scissor members 81a, 81b to adopt a fully open position, as shown in Figure 29. It is to be noted here, that for the purposes of this description, each pair of scissor members 81a, 81b is considered to comprise two sets of jaws, with the first set facing vertically upwards and a second set faces virtually downwards. Using such an interpretation the jaws of the scissor members 81a, 81b are shown fully open in Figure 29.

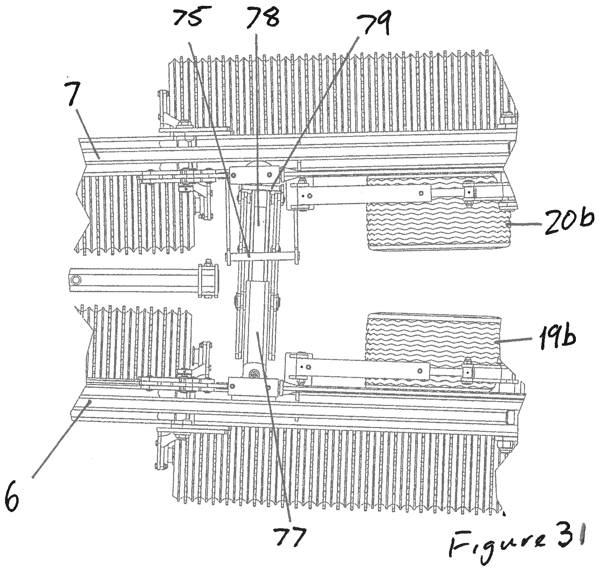

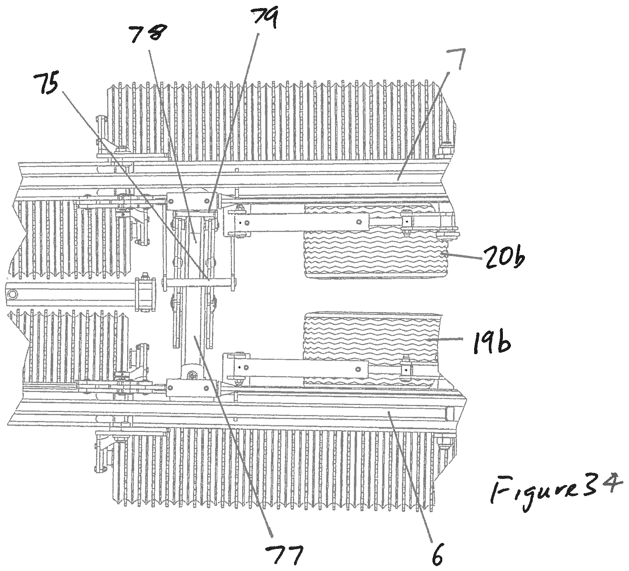

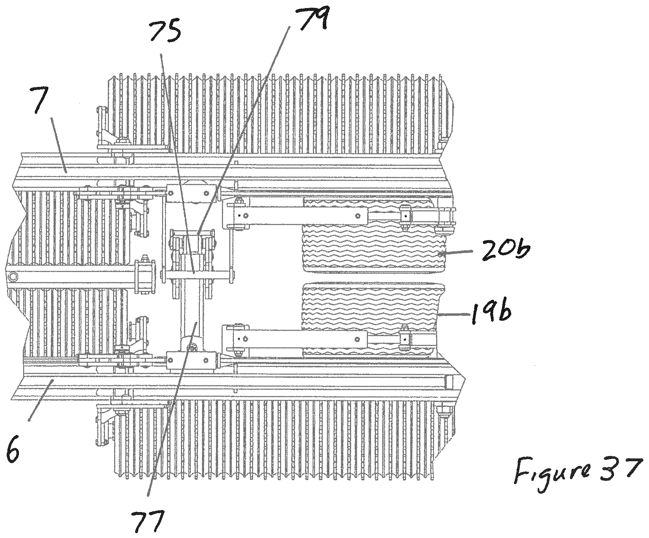

When the frames 6 and 7 of the implement 1 are closing and the frames 6 and 7 are in the position shown in Figures 28 to 30, the stop plate 79 has not quite made contact with the right hand frame 7. Continued movement of the implement 1 in a forward direction, causes the frames 6 and 7 to come together, (as described with reference to the previous embodiments) until the stop plate 79 contacts the frame 7, as shown in Figures 31 to 33. At this point the hydraulic ram 78 is set so that it is free to close by the action of the left and right hand frames 6 and 7 coming together, causing the stop plate 79 to urge the hydraulic ram 78 to close until the position is reached as indicated in Figures 34 to 36, where the scissor members 81a, 81b are forced to close their upward and downward facing jaws. At this point the hydraulic ram is actuated so that the upward and downward facing jaws of respective pairs of scissor members 81a, 81b engage with the locking bars 75, drawing the left and right hand frames 6 and 7 together, or assisting the drawing of the left and right hand frames together, until they adopt the closed transport configuration shown in Figures 37, 38 and 39, locking the frames 6 and 7 together.

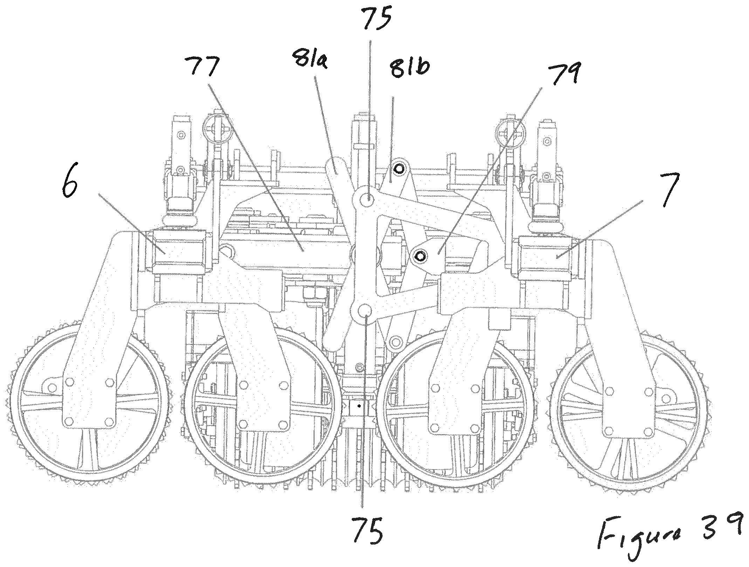

As will perhaps will be most easily appreciated with reference to Figure 39, when in the position shown in Figures 37 to 39 the respective pairs of scissor members 81a, 81b not only hold the left and right hand frames 6, 7 together in the closed transport configuration (that is to say retains them horizontally together as shown), but the respective pairs of scissor members 81a, 81b also lock the frames 6 and 7 rotationally and horizontally together so that the frames 6 and 7 and associated components, particularly the wheels 19a, 19b, 20a and 20b are held together in a relatively ridged configuration, which acts to maintain stability of the implement whilst being towed.

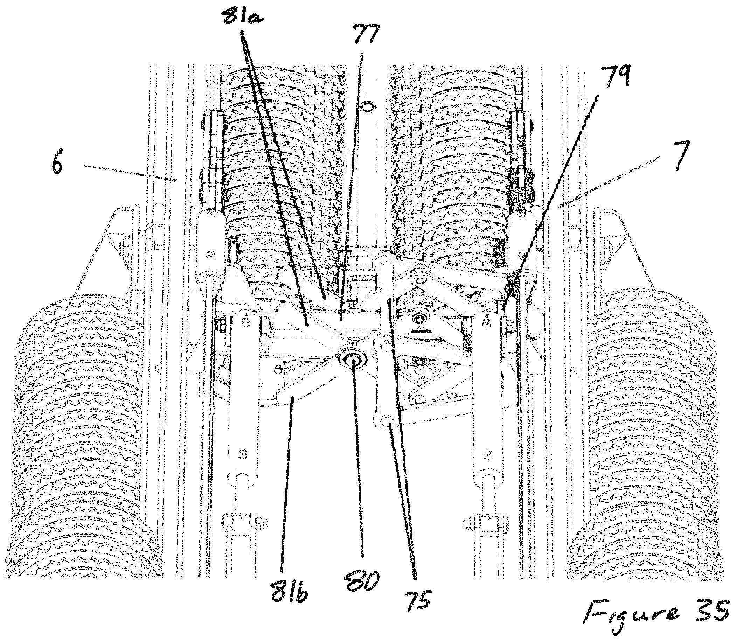

In addition to assisting in completing the final stages of closing the frames 6 and 7, the engagement mechanism 72 may also assist in deployment of the implement. To do this, starting from the closed transport configuration shown in Figures 37 to 39 the hydraulic ram 78 is actuated at the commencement of reversing to deploy the implement 1 to the working configuration. As the ram 78 extends, not only does this cause the jaws of the respective pairs of scissor members 81a, 81b to open, as shown in Figures 35 to 36, but it also causes the stop plate 79 to push the right hand frame 7 away from the left hand frame 6, until the implement adopts the configuration shown in Figures 31 to 33. This greatly assists opening the implement from the transport configuration to a working configuration, for in the position shown in Figures 31 to 33 the wheels 19a, 19b will be angled relative to wheels 20a, 20b (see Figure 26) and thus engagement mechanism, in initially opening the frames 6 and 7 avoids any tendency for the pairs of wheels 19a, 19b and 20a, 20b to tramline together.

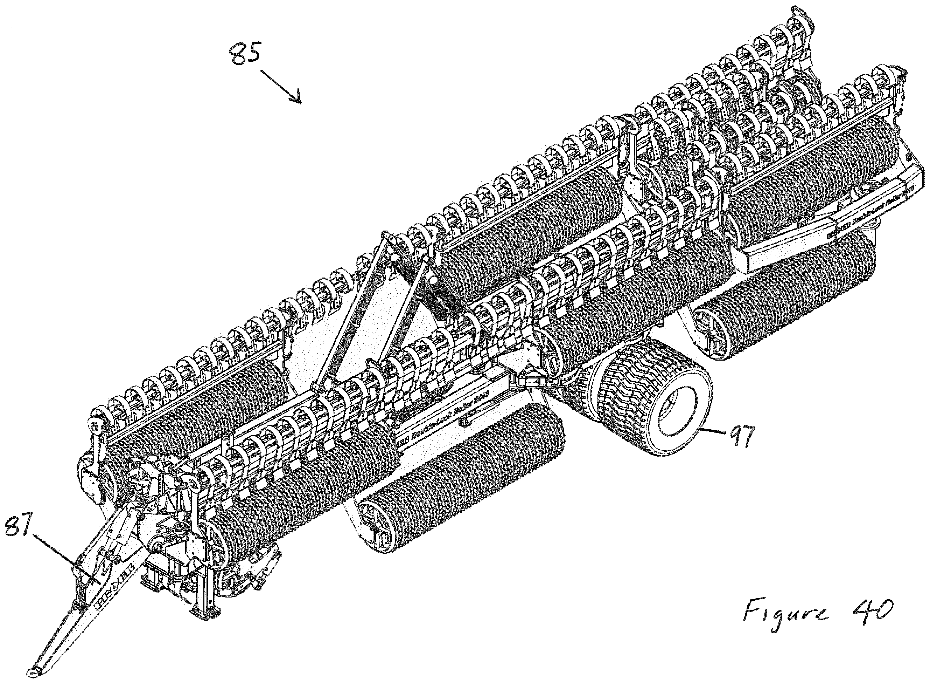

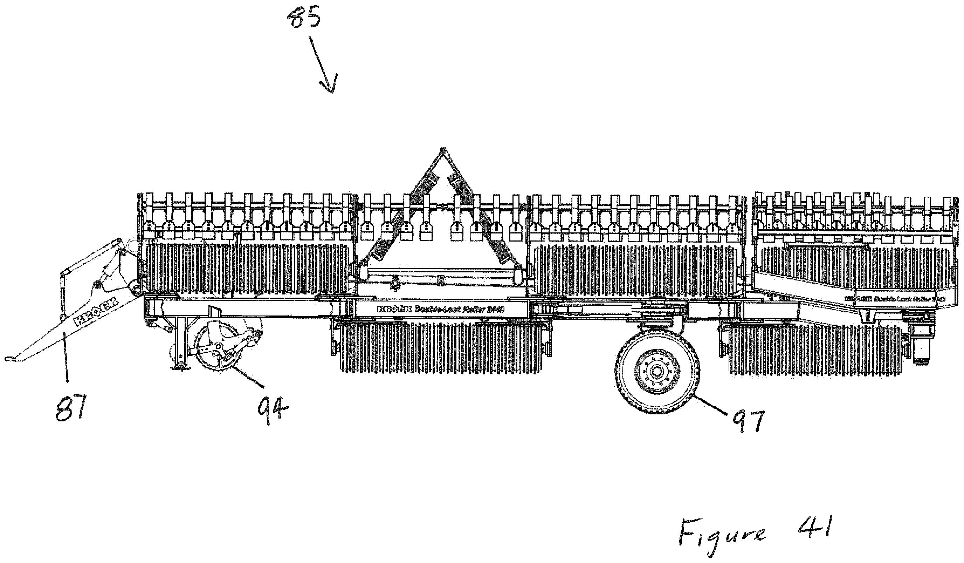

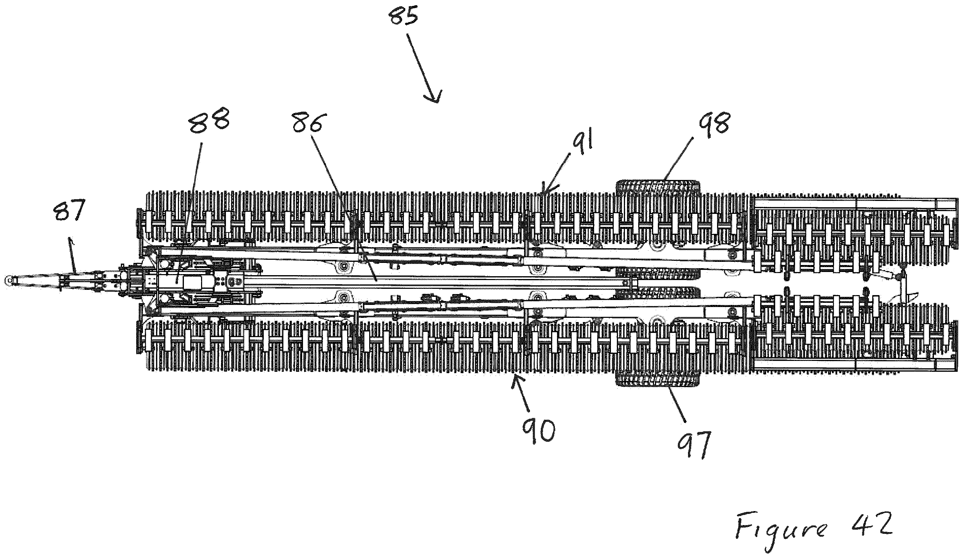

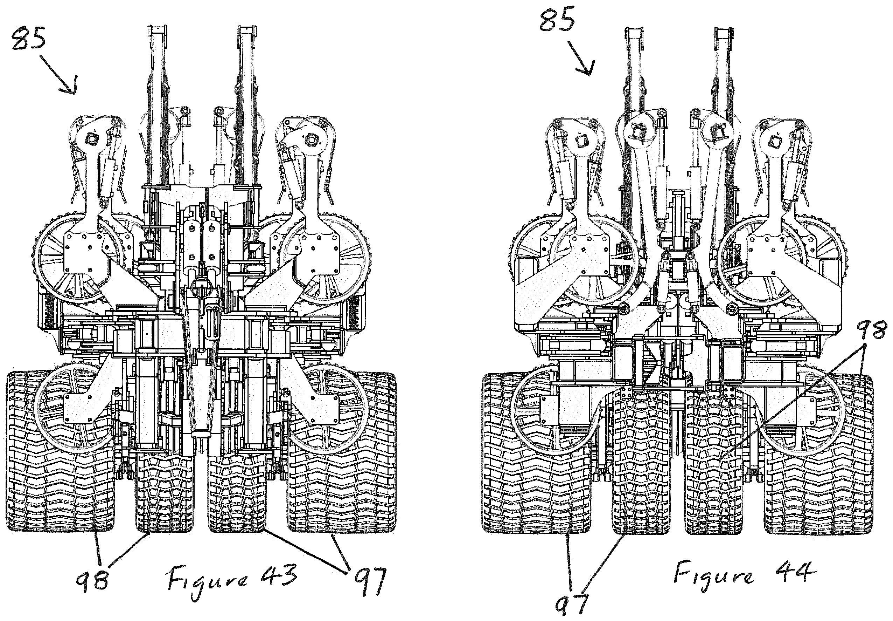

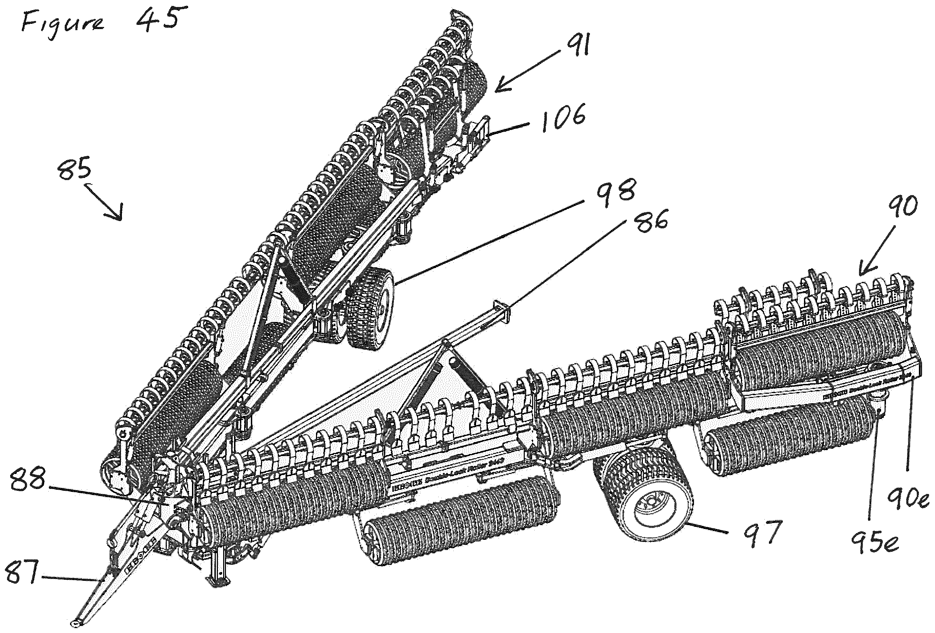

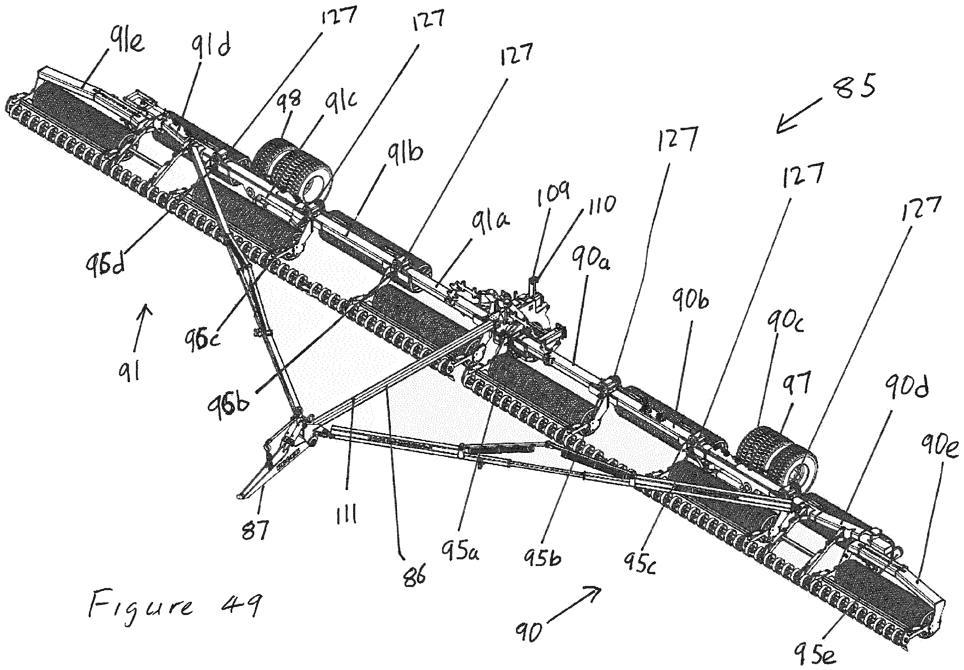

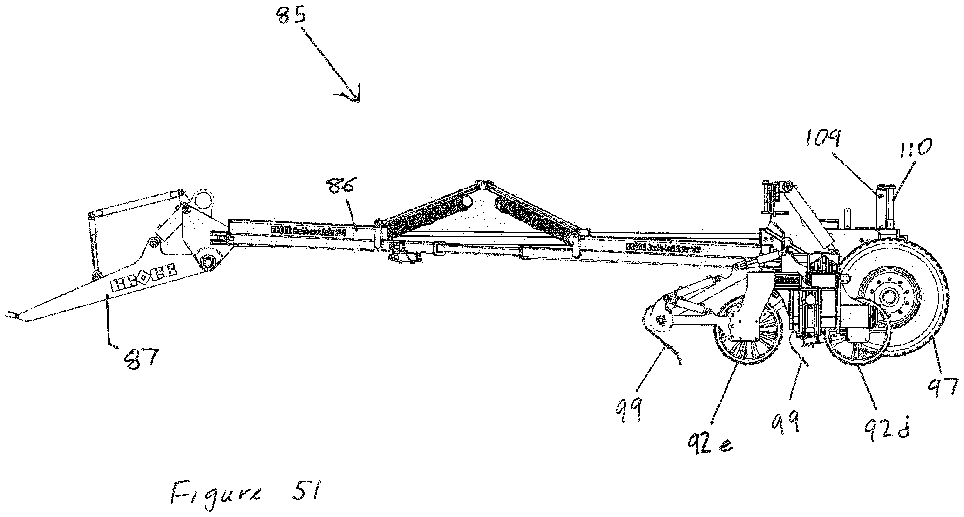

Referring now to Figures 40 to 59, these show a further embodiment of an agricultural implement in accordance with the present invention, which functions in a similar manner to the embodiments previously described. Figures 40 to 44 show the implement, indicated generally as 85, in a folded transport configuration and Figures 45 to 48 show the implement 85 progressively opening to the working configuration of Figures 49 to 51.

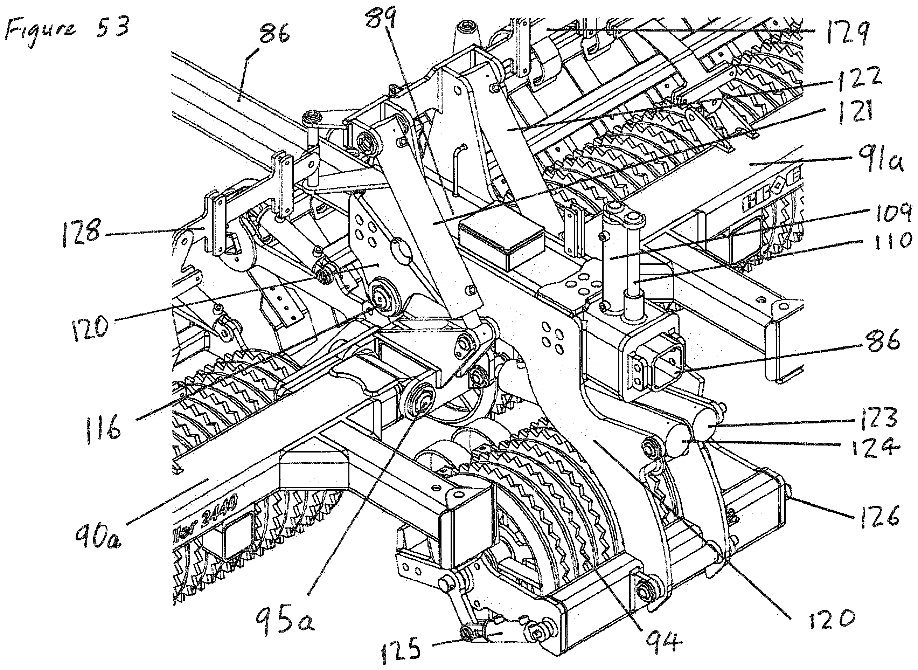

With reference to all of Figures 40 to 51 and particularly Figures 45 and 49, the implement 85, comprises a box section drawbar 86 having a towing hitch 87 at the front end and a carriage 88 having a box section member 89 (see Figure 53) coaxially mounted on the drawbar 87, which can slide backwards and forwards along the drawbar 87 in the same manner as in the previous embodiments. The carriage 88 has a left hand frame 90 and a right hand frame 91 mounted to it.

The left hand frame 90 comprises sub-frames 90a to 90e and the right hand frame 91 comprises sub-frames 91 to 91e. Each of the sub-frames 90a to 90e and 91 to 91e supports a respective axle (not shown) on which is mounted a respective press 92a to 92e and 93a to 93e. An additional central press94 is mounted to the carriage 88.

The proximal ends of each of the left hand and right frames 90 and 91 are pivotally connected to the carriage 88 by pivots 95a and 96a, pivot 95a being most clearly seen in Figure 53.

The pivots 95a and 96a are the inner most of a series of pivots 95a to 95e and 96a to 96e, which pivotally connect adjacent sub-frames 90a to 90e and 91a to 91e together, permitting all the presses 92a to 92e, 93a to 93e and 94, when in the working configuration of Figure 49, to follow the contours of the land, as with the previously described embodiments.

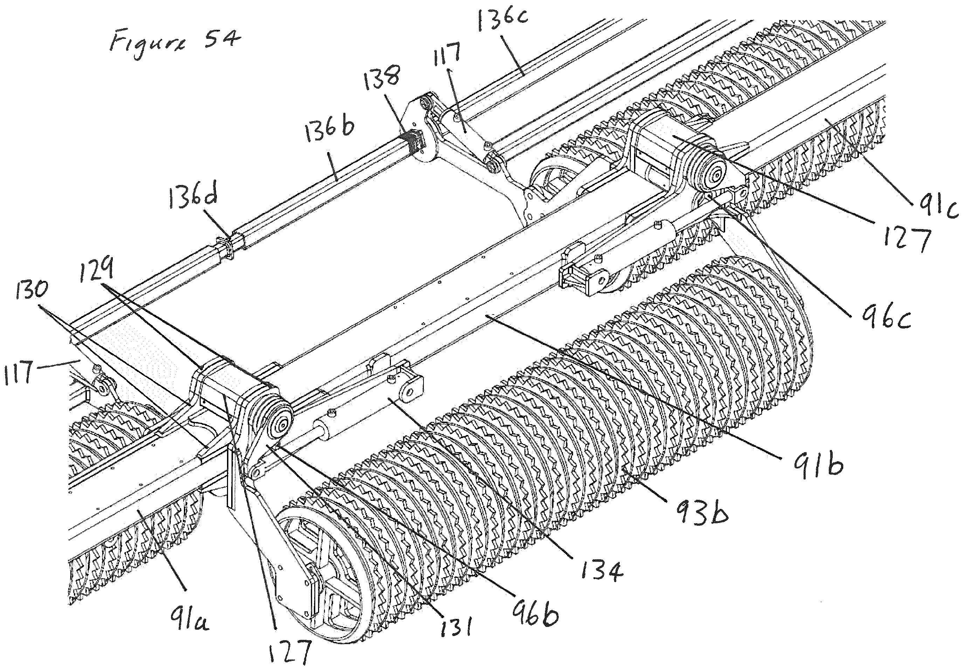

Each of the pivots 95b to 95d and 96b to 96d has a respective locking mechanism 127 which is described below in greater detail with reference to Figures 54 to 56. These locking mechanisms 127, when actuated, align respective adjacent sub-frames 90a to 90d and 91a to 91d.

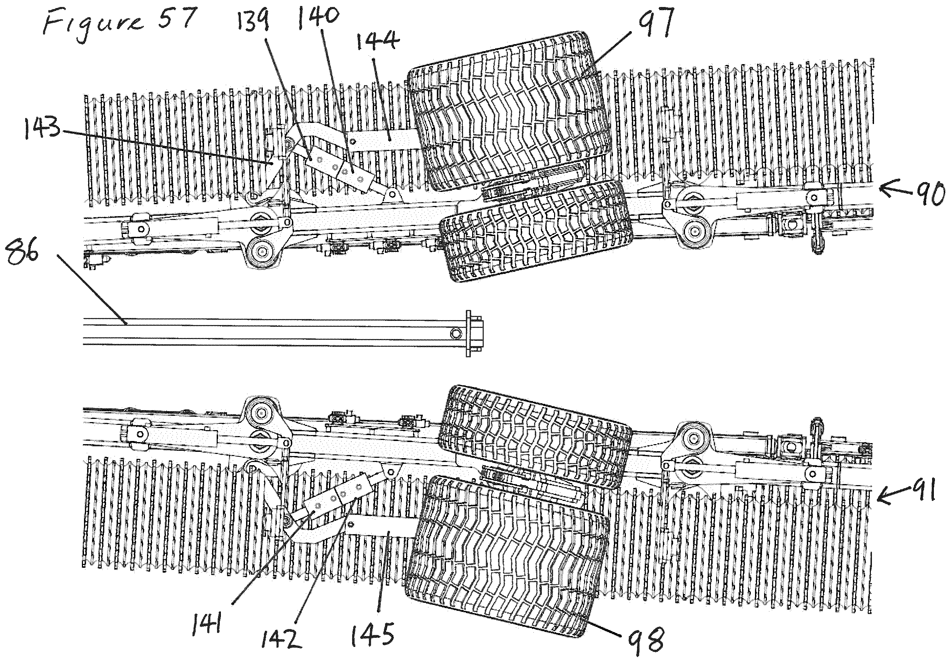

Each of the frames 90 and 91 are mounted on a respective pair of transport wheels 97 and 98, with each pair being rotatable with respect to the frame 90 or 91 on which they are mounted, as will be described below with reference to Figures 57 to 59.

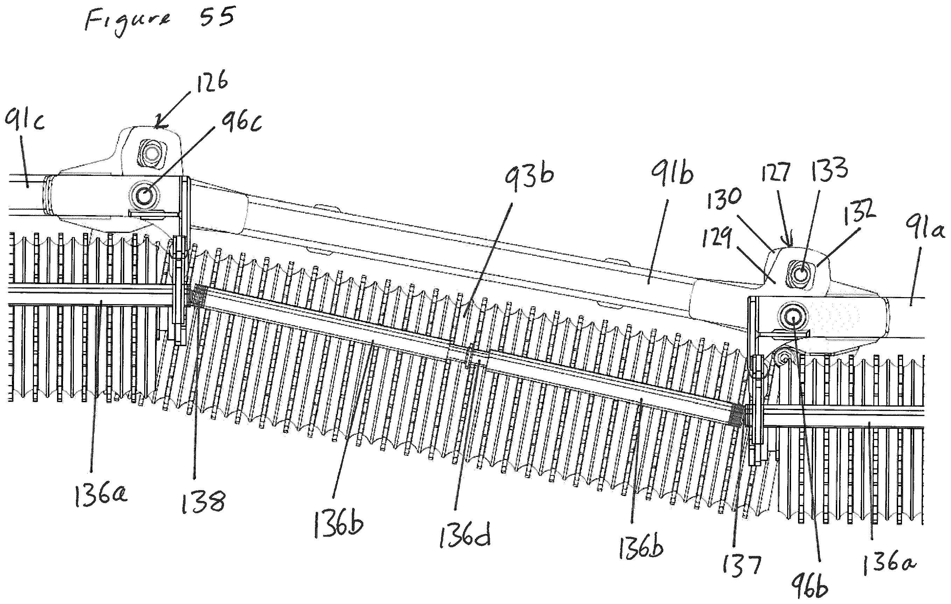

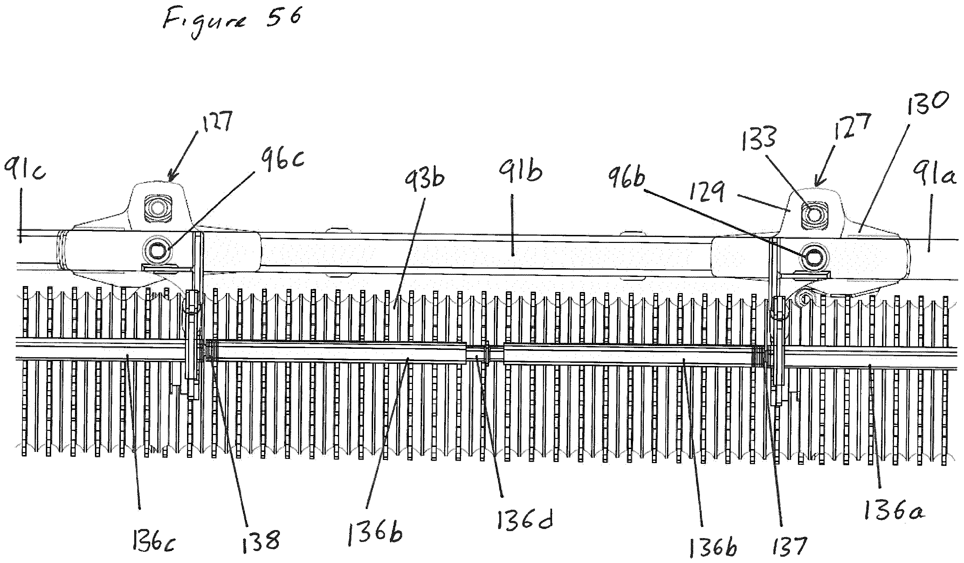

Each of the sub-frames 90a to 90e and 91a to 91e has a respective set of levelling boards 99 mounted in front of it on a rotatable shafts 136, described in greater detail below with reference to Figures 55 and 56, which enables the levelling boards 99 to be raised or lowered by rotation of the shafts 136.

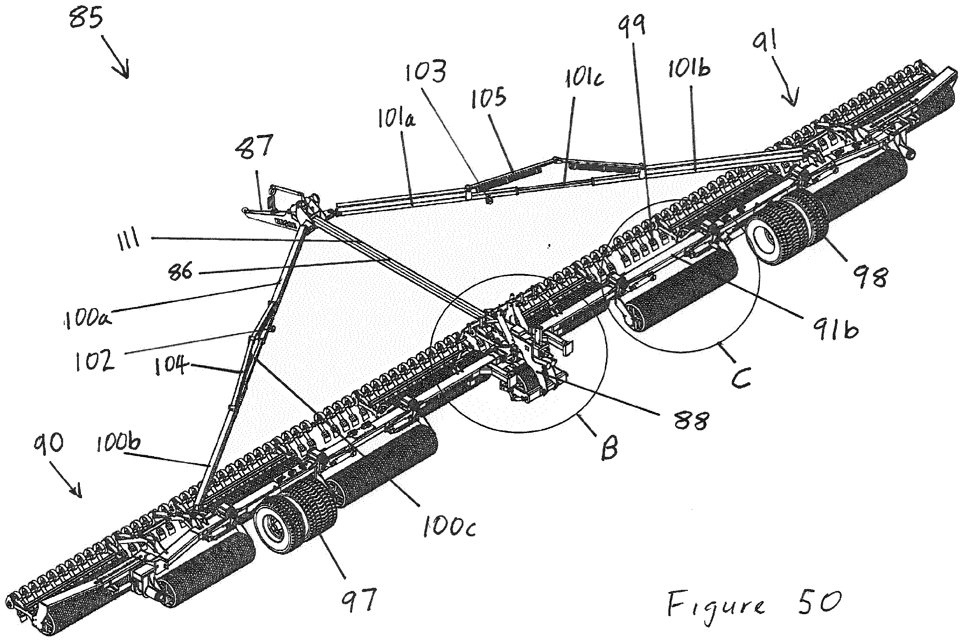

As can be seen most clearly with reference to Figure 50, respective retaining bars 100, 101 connect each frame 90, 91 to the towing hitch 87 at the front of the drawbar 86. Each of the retaining bars 100, 101 is telescopic and comprises two box section tubular members 100a, 100b and 101a, 101b joined by a respective central section 100c, 101c, such that each retaining arm 100, 101 is telescopically extendable and can be locked in an extended position by small hydraulic rams 102, 103. Respective bridging members 104, 105 with associated tubing are provided to convey hydraulic lines across the telescopic sections of the respective retaining arms 100, 101.

There is below a more detailed description of some of the components of the implement 85, but this description may be better understood after the following description of the general operation of the implement 85, described with reference to Figures 40 and 45 through to 49.

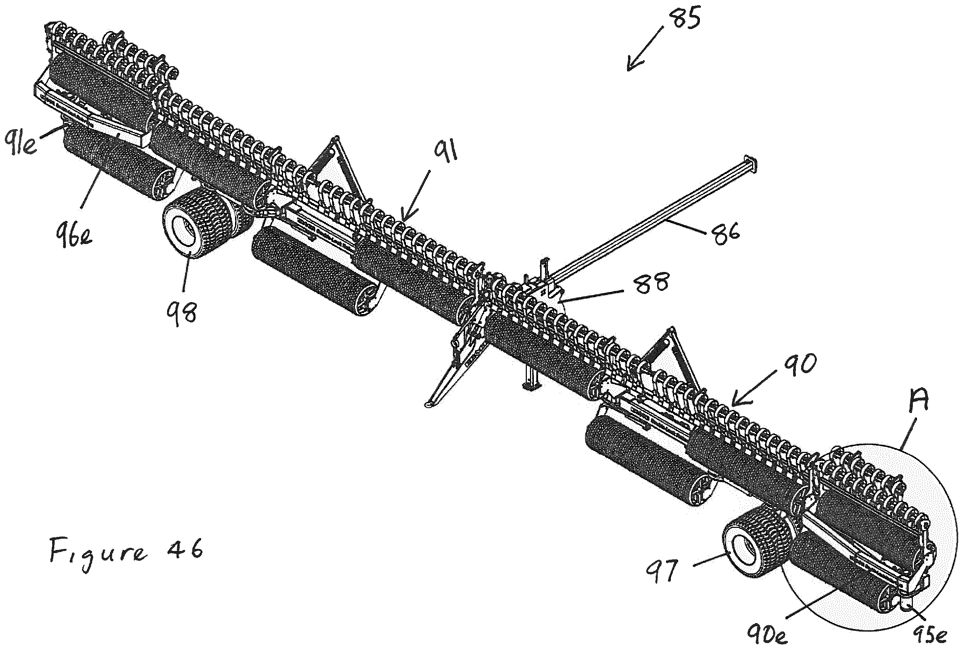

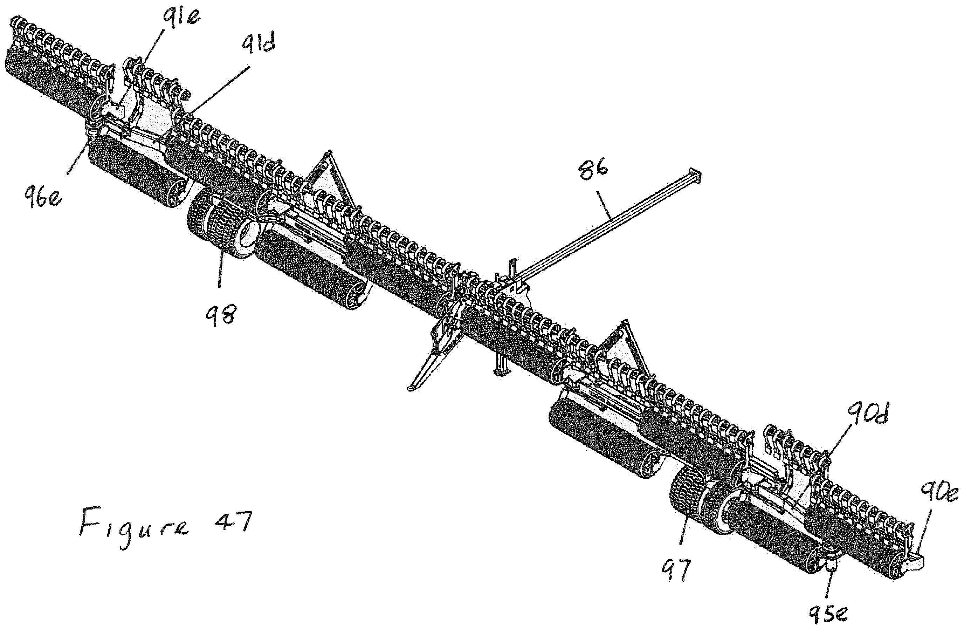

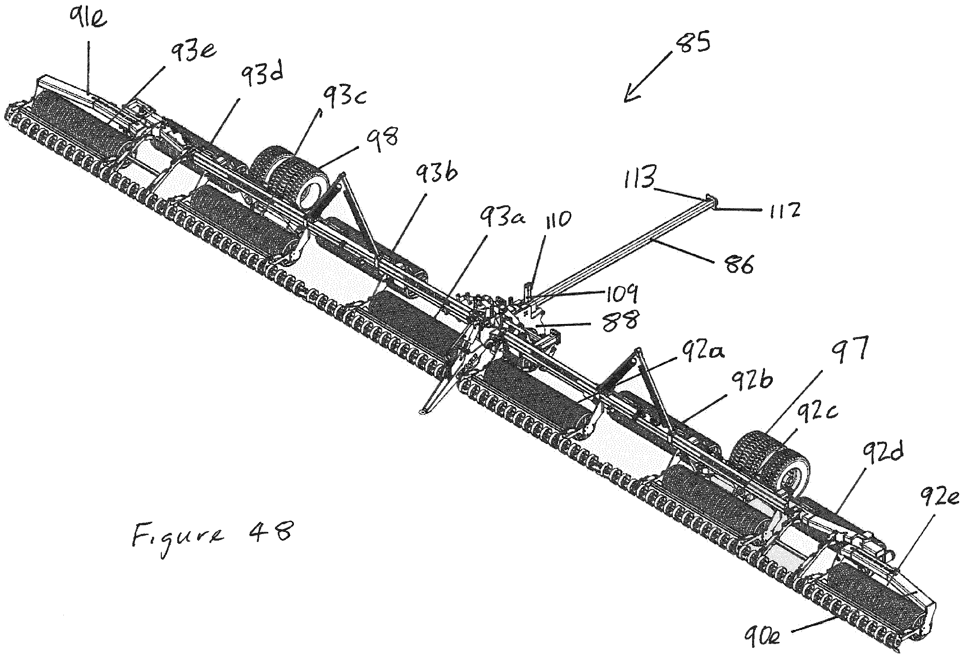

Commencing with the implement 85 in the transport configuration, illustrated in Figure 40, pairs of transport wheels 97, 98 are angled relative to their respective frames 90 and 91, as shown in Figure 45. A locking clasp 106 (see Figure 45) is released so that when the implement is reversed the pairs of transport wheels 97 and 98 will cause the frames 91 and 92 to spread apart, as illustrated in Figure 45, until they adopt the position illustrated in Figure 46. At this point the pairs of transport wheels 97, 98 are then rotated to the position shown in Figure 47 and the end sub-frames are then rotated outwardly rotated on respective pivots 95e, 96e to extend the respective frames 90, 91 as shown in Figure 47. The frames 90, 91 are then tilted forwards by a mechanism subsequently described with reference to Figure 53, so that the frames 90, 91 adopt the position illustrated in Figure 48 where the pairs of transport wheels 97, 98 are raised slightly above the level of the ground so that the frames 90, 91 are carried by the presses 92a to 92e, 93a to 93e and 94. The locking mechanisms 127 associated with each of pivots 95b to 95d and 96b to 96d, which until this point have been locked to keep the sub-frames 90a to 90d and 91a to 91d aligned, sub-frame are then released so that presses 92a to 92e, 93a to 93e and 94 may follow the contours of the land, as described in the previous embodiments.

As an alternative to the above, again starting from the transport configuration illustrated in Figure 40, the transport wheels may be arranged to face outward when facing forward, whereby the implement would then be towed forward to cause the frames to open until they adopt the position illustrated in Figure 46. The procedure from thereon would be the same as above

A hydraulic ram 109 on the carriage 88 is actuated and releases a locking pin 110, so that the pin 110 disengages hole 111 (see Figure 49) and the drawbar 86 is then drawn forward until it meets stop 112, shown in Figure 48 whereby the ram 109 is then actuated again so that the locking pin 110 engages the hole 113 at the back of the drawbar 86, locking the carriage 88 on the drawbar 86, in the position shown in Figure 49. At this point the retaining arms 100, 101 are fully extended and locked in place by rams 102, 103. In this working configuration, as illustrated in Figures 49, 50 and 51, the implement 85 functions in the same way as the previously described embodiments.

In order to return the implement 85 to the transport configuration shown in Figures 40 to 44, the procedure is substantially reversed, except that after the frames 90, 91 have been raised to the position shown in Figure 47 the pairs of transport wheels 97, 98 are normally turned through 90°, so that their axes are orthogonal to the frames 90, 91. Subsequent forward movement of the implement 85 then draws the frames together. However, in certain soil conditions the pairs of transport wheels 97, 98 could be set at an angle to assist with more rapid closing of the frames 90, 91.

An advantage of the implement described in this embodiment is that the axles of each wheel of each of the pairs of transport wheels 97 or 98, have a common axis and therefore there is no tendency to scrub when the implement is opened or closed. Furthermore, the ability to turn the pairs of transport wheels 97, 98 may greatly assist when opening the frames 90, 91, as will be appreciated from Figure 45.

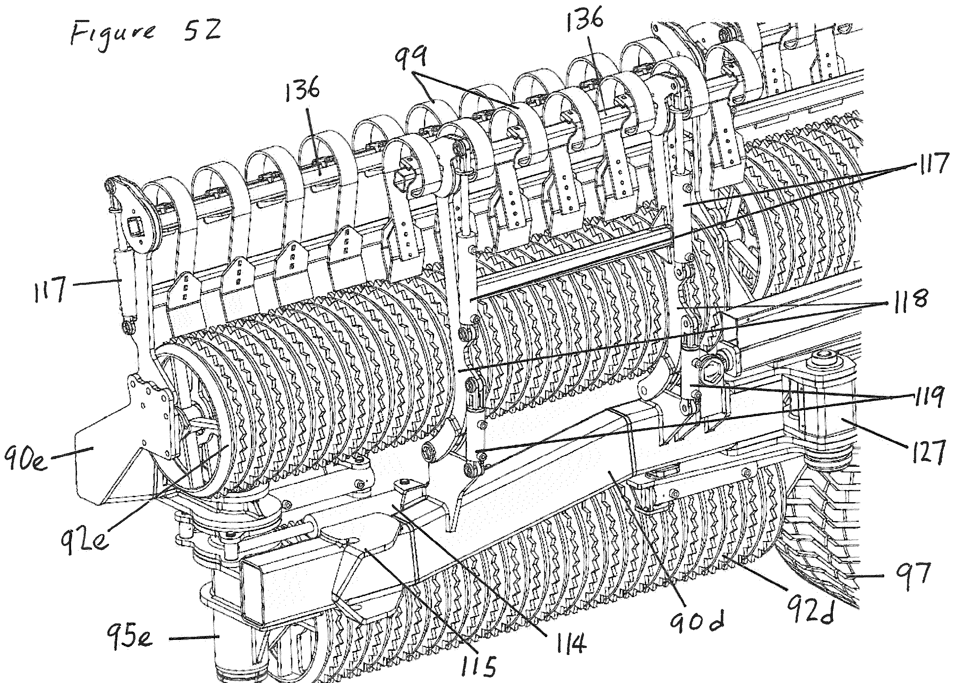

Referring now to Figure 52, this shows the various components of the sub-frames 90d, 90e, in the configuration illustrated in inset A of Figure 46, but from a rear perspective as per the rear perspective of Figure 50. This shows the outer most sub-frame 90e mounted to sub-frame 90d by pivot 95e. Hydraulic ram 114 controls the position of the sub-frame 90e relative to that of the sub-frame 90d and is set to be free floating when in the working configuration to permit the presses 92d and 92e to follow the contours of the land. Figure 52 also shows the second part 115 of the clasp 106, for locking the two frames 90, 91 together when in transport configuration.

Figure 52 also illustrates how the levelling boards 99 are mounted on shafts 136. The shafts 136 are rotated by respective rams 117, which in the working configuration cause the levelling boards 99 to engage the soil or to be raised from the soil. These also cause the levelling boards 99 to be folded into the configuration shown in Figure 52, prior to the frames 90, 91 being raised to the position shown in Figure 52 and being folded into the transport configuration of Figure 1.

With further reference to Figure 52, it can also be seen here that one of the shafts 136 (and associated hydraulic rams 117 and levelling boards 99) is mounted on a pair of arms 118, which arms are raised by hydraulic rams 119 to the position shown in Figure 52. This arrangement permits the associated levelling boards 99 to be lifted out of the way of the press 92e, before the press 92e is swung inboard, to the position illustrated in Figure 52.

Referring now to Figure 53, this corresponds to inset B of Figure 50 and shows to an enlarged scale the carriage, indicated generally as 88. The structures 128 carry the hydraulic lines for various hydraulic rams, either to the carriage 88 or across the carriage 88 to connect corresponding hydraulic rams.

A carriage pivot 116 permits a part 120 of the carriage 88 to be pivoted by four rams 121 to 124 relative to the box section member 89 of the carriage 88. The pivot points 95a, 96a (96a is not shown) by which sub-frames 90a, 91a (and thus respective frames 90, 91) are mounted on this part 120 of the carriage 88 and thus operation of the four rams 121 to 124 cause the frames 90 and 91, once the drawbar 86 has been retracted to the position shown in Figure 49, to be raised from the working configuration illustrated in Figures 53 and 49 to the raised configuration shown in Figure 47.

Figure 53 additionally shows the central press 94 and hydraulic rams 125, 126 used to control the position of the levelling boards 99 associated with the central press 94.

Referring now to Figures 54 to 56, Figure 54 is a rear perspective view of sub-frame 91b shown in inset C of Figure 50, with the levelling boards 99 removed for clarity. Figure 55 is a front elevation corresponding to Figure 54 with the locking mechanisms in an unlocked state and Figure 56 is a corresponding Figure but with the locking mechanism in a locked state.

Referring first to Figure 54, this shows sub-frames 91a, 91b connected together by pivot 96b and sub-frames 91b and 91c connected together by pivot 96c, which pivots can be more clearly seen in Figures 55 and 56.

Each of the pivots 96b, 96c (and 96d not shown in Figures 54 to 56) and the corresponding pivots 96b to 96d of the frame 90,has a locking mechanism 127 associated with them. Referring to the one associated with pivot 96b, this comprises a first pair of plates 129 fixed to the sub-frame 91b and a second pair of plates 130 attached to sub-frame 91a. As can be seen from Figures 55 and 56, one pair of plates has square apertures 132 therein through which passes an oval pin 133. The oval pin 133, as shown in Figure 54, is connected to an arm 134, which is connected to hydraulic ram 134. The hydraulic ram 134 controls the rotational position of the oval pin 133. In the position shown in Figure 55 the oval pin 133 permits relative lateral movement of the first pair of plates 129 relative to the second pair of plates 130, permitting limited movement of the sub-frames 91a, 91b relative to each other about pivot 96b, so that the associated presses 93a, 93b may follow the contours of the land. However, rotation of the oval pin to the position shown in Figure 56, forces the first pair of plates 129 and the second pair of plates 130 into register, thus aligning adjacent sub-frames, as shown in Figure 54 and subsequently preventing lateral movement between the first pair of plates 129 and the second pair of plates 130 and thus locking the sub-frames 91a, 91b in the aligned position illustrated in Figure 54. Here the frames 90, 91 are ready to be raised to the position shown in Figure 47. Once the frames 90, 91 are raised to the position illustrated in Figure 47, the axis of the pivots 95b to 95d and 96b to 96d, as well as the axis of the inner pivots 95a, 96a are vertically aligned which will act to retain all the sub-frames of both frames 90, 91 in a horizontal position.

With further reference to Figures 54 to 56, these also clearly show shafts 136a, 136b and 136c on which the levelling boards (not shown for clarity) are mounted. Adjacent pairs of shafts 136a, 136b and 136b, 136c are connected by respective universal joints 137, 138. Shaft 136b has a central telescopic central portion 136d, to accommodate expansion and contraction of the shaft 136b which will occur due to the pivoting movement of adjacent pairs of sub-frames 91a, 91b or 91b, 91c.

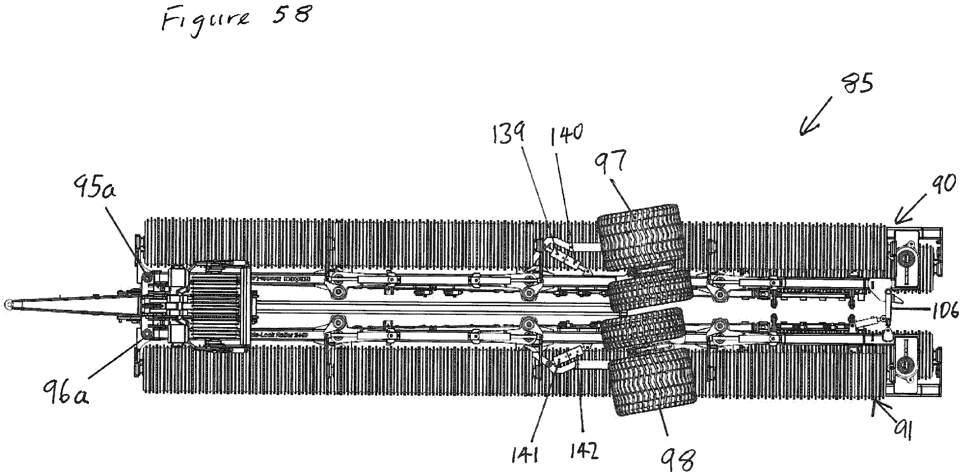

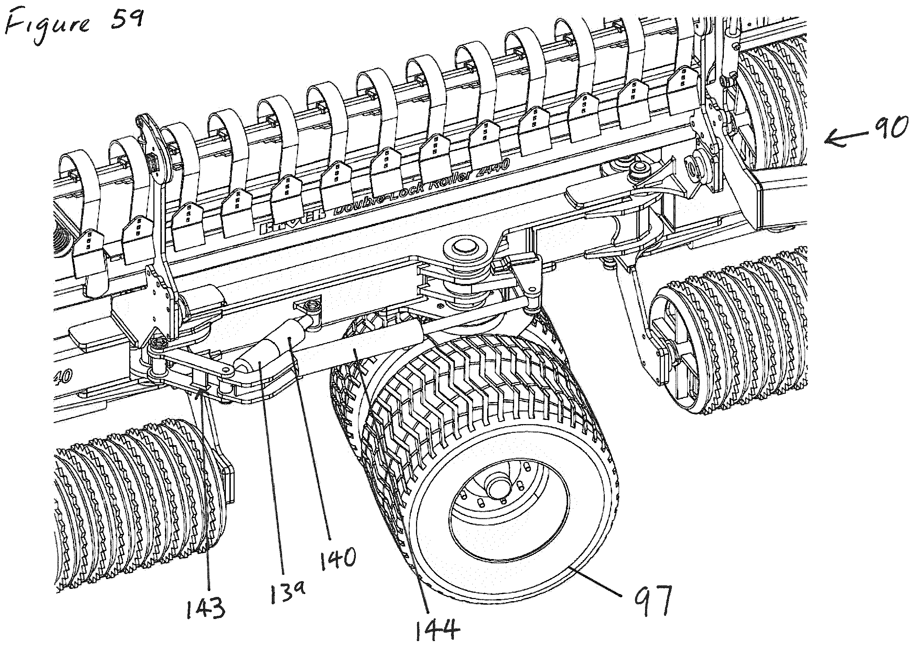

Referring now to Figure 57 to 59, these show the components associated with the steerage of the pairs of transport wheels 97, 98 (for clarity a press has been removed from the perspective view of Figure 59). Figure 57 is a partial view from below of the implement 85 as the frames 90, 91 commence opening, approaching the stage illustrated in Figure 45. Here the respective pairs of transport wheels 97, 98 have been set to be angled outwards as shown. This is achieved by associated pairs of hydraulic rams 139, 140 and 141, 142 both being set to a fully extended position. In contrast, setting one of the associated pairs of rams 139, 140 and 141, 142 such that one of each pair is fully extended and one of each pair is fully contracted causes the associated pair of transport wheels 97 or 98 to be aligned with the respective frame 90, 91 and thus adopt the transport configuration. Alternatively if both of one pair of rams 139, 140 is fully extended and both of one pair of rams 141, 142 are fully contracted, as shown in Figure 58, then the pairs of transport wheels 97 or 98 would adopt the position illustrated in Figure 58, permitting the transport wheels 97, 98 to be turned to assist in manoeuvring the implement 85 during transportation.

Referring now to Figure 59, this shows a linkage mechanism, indicated generally as 143, by which the rams 139 and 140 control the position of the pair of transport wheels 97. This linkage mechanism 143 incorporates a further hydraulic ram 144, which is retained in a fully extended position during the previously described steering of the pair of transport wheels 97. This ram 144 (and a corresponding ram 145 associated with the pair of transport wheels 98) is used to rotate the associated pair of transport wheels 97 through 90°, in order to cause them to adopt the working configuration position illustrated in Figure 49.

The present invention has been described above by way of example only with reference to the illustrated embodiments of an agricultural implement. It will be appreciated that many modifications may be made to those embodiments without departing from the scope of the appended claims. In addition features of one embodiment may be substituted for those of another or they may be applicable to different applications to those illustrated.

## Claims

1. An agricultural implement (1) comprising a drawbar (2) having a towing hitch or multipoint linkage (3) at a front end thereof and a carriage (4) having tool carrying frames (6, 7) pivotally mounted at their proximal ends to the carriage, the frames (6, 7) in an in use working configuration extending to opposite sides of the carriage (4), substantially orthogonal to the drawbar (2), the frames (6, 7) being arranged to be folded inwards to a transport configuration where their proximal ends are located forward of their distal ends which extend towards the rear of the implement (1), wherein the carriage (4) is arranged to move forwards and backwards along the drawbar (2) so that, in the transport configuration, the carriage (4) can be positioned towards the front of the drawbar (2) with the frames (6, 7) folded along the sides of the drawbar (2) and in the working configuration the carriage (4) and frames (6, 7) can be positioned towards the rear of the drawbar (2), **characterised in that** the implement (1) is arranged such that the frames (6, 7) can be extended outward from the transport configuration to their working configuration prior to the drawbar (2) being pulled through the carriage (4) to place the implement into the working configuration.

2. An agricultural implement (1) as claimed in claim 1 further comprising a mounting (30) on the drawbar (2) located forward of the position of the carriage (4) when in the transport configuration and two restraining arms (31, 32) each attached to the mounting (30) at one end and to a respective frame (6, 7) at the other end, which restraining arms (31, 32) are telescopic and are extended by the action of drawing the drawbar (2) forward relative to the carriage (4).

3. An agricultural implement as claimed in claim 1 or 2 where each frame has a transport wheel or wheels mounted towards but remote from a distal end thereof.

4. An agricultural implement as claimed in claim 1, 2 or 3 wherein the carriage comprises a tubular member arranged to slide coaxially on the drawbar.

5. An agricultural implement (1) as claimed in any preceding claim wherein the length of the drawbar (2) is fixed.

6. An agricultural implement (1) as claimed in any preceding claim wherein the distance from the front of the drawbar (2) to the point on the carriage (4) to which the frames (6, 7) are pivoted, in the working configuration, is between 0.2 and 0.3 times the maximum width of the implement (1).

7. An agricultural implement (1) as claimed in any preceding claim wherein each frame (6, 7) carries one or more rollers, presses or discs (44).

8. An agricultural implement (1) as claimed in any proceeding claims comprising a left hand frame(6) arranged to extend to the left hand side of the drawbar (2) and a right hand frame (7) arranged to extend to the right hand side of the drawbar (2), wherein the proximal ends of the left and right hand frames (6, 7) are each pivotally connected in a substantially vertical axis to the carriage (4) to enable them to open and close between the transport configuration and working configuration.

9. An agricultural implement (1) as claimed in any preceding claim comprising a left hand frame (6) arranged to extend to the left hand side of the drawbar (2) and a right hand frame (7) arranged to extend to the right hand side of the drawbar (2), each frame (6, 7) comprising a plurality of sub-frames (6a-6c, 7a-7c), each sub-frame (6a-6c, 7a-7c) supporting an axle supporting a roller, press or discs (44), each sub-frame (6a-6c, 7a-7c) being pivotally connected to an adjacent sub-frame or sub-frames so that in use, in an open working configuration where each frame (6, 7) extends substantially orthogonally from the drawbar (2), each of the left hand and right hand frames (6, 7) may flex by virtue of adjacent sub-frames (6a-6c, 7a-7c) pivoting relative to each other, to permit the associated rollers, presses or discs (44) to follow the contours of land being worked, wherein each frame (6, 7) is pivotally connected at or towards a proximal end, directly or indirectly to the drawbar (2) and has towards, but remote from, a distal end one or more transport wheels (19a, 19b, 20a, 20b) arranged to support the respective frame (6, 7) when in a transport configuration, each frame (6, 7) further comprising a locking mechanism (17, 18) arranged to lock adjacent sub-frames (6a-6c, 7a-7c) together so that the respective rollers, presses or discs (44) all lie substantially on a common horizontal plain and wherein the frames may be folded from the open working configuration to the closed transport configuration, where each frame (6, 7) is folded so that the frames (6, 7) extend in the same direction and lie substantially parallel to each other and to the axis of the drawbar (2).

10. An agricultural implement (1) as claimed in claim 9 wherein the locking mechanisms (17, 18) are activated whilst in the transport configuration to lock the sub-frames (6a-6c, 7a-7c) such that the frames (6, 7) may be supported by the transport wheels (19a, 19b, 20a, 20b), raising the rollers, presses or discs (44) such that the implement (1) may be reversed whilst initially in the transport configurations to cause, or assist, the frames (6, 7) to open towards the working configuration.

11. An agricultural implement (1) as claimed in any preceding claim further comprising a synchronisation linkage (25) extending between each frame (6, 7) and connected directly or indirectly to the drawbar (2), the synchronisation linkage (25) being arranged such as to cause the two frames (6, 7) to open in synchronisation with each other.

12. An agricultural implement (1) as claimed in any preceding claim wherein each of the left hand and right hand frames (6, 7) has one or more transport wheels (97, 98) mounted on a common axis, which axis can be rotated to change the direction of the wheel or wheels relative to the frame (6, 7); and further comprising means (139-145) to angle the wheel or wheels (97, 98) on both left and right hand frames outwardly when facing toward the rear in the transport configuration, such that when the implement is reversed in the transport configuration the outward facing wheels cause the frames to open or to angle the wheel or wheels on both left and right hand frames outwardly when facing forward in the transport configuration, such that when the implement (1) is pulled forward in the transport configuration the outward facing wheels cause the frames to open.

13. An agricultural implement (1) as claimed in any preceding claim further comprising means to rotate the frames (6, 7) from the working configuration about an axis substantially parallel to the frames and perpendicular to the drawbar (2) where the transport wheels (97, 98) are arranged to be rotated such that they are substantially orthogonal to their respective frames and whereby rotating the frames about the axis substantially perpendicular to drawbar (2) raises presses or rollers (44) on the frames (6, 7) and transfers the mass of the presses or rollers and the frames substantially on to the transport wheels (97, 98).

14. An agricultural implement (1) as claimed in claim 13 wherein, once the transport wheels (97, 98) are supporting the presses or rollers (44), the transport wheels are arranged to be rotated such that they are substantially aligned with the frames (6, 7).

## Patentansprüche

1. Landwirtschaftliches Arbeitsgerät (1), das eine Zugstange (2) mit einer Anhängekupplung oder einer Mehrpunkt-Anhängevorrichtung (3) an einem vorderen Ende davon und einem Schlitten (4) mit Geräteträgerrahmen (6, 7), die an ihren proximalen Enden schwenkbar am Schlitten montiert sind, aufweist, wobei die Rahmen (6, 7) sich in einer Arbeitsanordnung im Gebrauch im Wesentlichen orthogonal zur Zugstange (2) zu einander entgegengesetzten Seiten des Schlittens (4) erstrecken, wobei die Rahmen (6, 7) angeordnet sind, um einwärts auf eine Transportstellung geklappt zu werden, in der ihre proximalen Enden vor ihren distalen Enden liegen, die sich zur Rückseite des Arbeitsgeräts (1) hin erstrecken, wobei der Schlitten (4) zur Vorwärts- und Rückwärtsbewegung entlang der Zugstange (2) angeordnet ist, so dass in der Transportstellung der Schlitten (4) mit den an den Seiten der Zugstange (2) entlang geklappten Rahmen (6, 7) zum vorderen Ende der Zugstange (2) hin positioniert sein kann und in der Arbeitsstellung der Schlitten (4) und die Rahmen (6, 7) zum hinteren Ende der Zugstange (2) hin positioniert sein können, **dadurch gekennzeichnet, dass** das Arbeitsgerät (1) so angeordnet ist, dass die Rahmen (6, 7) von der Transportstellung nach außen in ihre Arbeitsstellung ausgefahren werden können, bevor die Zugstange (2) durch den Schlitten (4) gezogen wird, um das Arbeitsgerät in die Arbeitsstellung zu versetzen.

2. Landwirtschaftliches Arbeitsgerät (1) nach Anspruch 1, das ferner eine Halterung (30) an der Zugstange (2), die in der Transportstellung vor der Position des Schlittens (4) liegt, und zwei Haltearme (31, 32), die jeweils an einem Ende an der Halterung (30) und am anderen Ende an einem jeweiligen Rahmen (6, 7) angebracht sind, aufweist, wobei diese Haltearme (31, 32) teleskopisch sind und durch die Bewegung des Ziehens der Zugstange (2) nach vorn relativ zum Schlitten (4) ausgefahren werden.

3. Landwirtschaftliches Arbeitsgerät nach Anspruch 1 oder 2, bei dem jeder Rahmen (ein) Transportrad oder -räder hat, die hin zu aber fern von einem distalen Ende davon montiert sind.

4. Landwirtschaftliches Arbeitsgerät nach Anspruch 1, 2 oder 3, wobei der Schlitten ein rohrförmiges Element aufweist, das zum koaxialen Gleiten auf der Zugstange angeordnet ist.

5. Landwirtschaftliches Arbeitsgerät (1) nach einem der vorhergehenden Ansprüche, wobei die Länge der Zugstange (2) fest ist.

6. Landwirtschaftliches Arbeitsgerät (1) nach einem der vorhergehenden Ansprüche, wobei in der Arbeitsstellung der Abstand vom vorderen Ende der Zugstange (2) zu dem Punkt am Schlitten (4), an dem die Rahmen (6, 7) angelenkt sind, zwischen dem 0,2- und 0,3-Fachen der maximalen Breite des Arbeitsgeräts (1) ist.

7. Landwirtschaftliches Arbeitsgerät (1) nach einem der vorhergehenden Ansprüche, wobei jeder Rahmen (6, 7) eine oder mehr Rollen, Ackerwalzen oder Scheiben (44) trägt.

8. Landwirtschaftliches Arbeitsgerät (1) nach einem der vorhergehenden Ansprüche, das einen linken Rahmen (6), der so angeordnet ist, dass er sich zur linken Seite der Zugstange (2) erstreckt, und einen rechten Rahmen (7), der so angeordnet ist, dass er sich zur rechten Seite der Zugstange (2) erstreckt, wobei die proximalen Enden der linken und rechten Rahmen (6, 7) jeweils in einer im Wesentlichen vertikalen Achse an den Schlitten (4) angelenkt sind, damit sie sich zwischen der Transportstellung und der Arbeitsstellung öffnen und schließen können.

9. Landwirtschaftliches Arbeitsgerät (1) nach einem der vorhergehenden Ansprüche, das einen linken Rahmen (6), der so angeordnet ist, dass er sich zur linken Seite der Zugstange (2) erstreckt, und einen rechten Rahmen (7), der so angeordnet ist, dass er sich zur rechten Seite der Zugstange (2) erstreckt, aufweist, wobei jeder Rahmen (6, 7) mehrere Unterrahmen (6a - 6c, 7a - 7c) aufweist, wobei jeder Unterrahmen (6a - 6c, 7a - 7c) eine Achse trägt, die eine Rolle, Ackerwalze oder Scheiben (44) trägt, wobei jeder Unterrahmen (6a - 6c, 7a - 7c) an einen oder mehr benachbarte(n) Unterrahmen angelenkt ist, so dass im Gebrauch in einer offenen Arbeitsstellung, in der jeder Rahmen (6, 7) sich im Wesentlichen orthogonal von der Zugstange (2) erstreckt, die linken und rechten Rahmen (6, 7) sich aufgrund dessen, dass benachbarte Unterrahmen (6a - 6c, 7a - 7c) relativ zueinander schwenken, flexibel bewegen, um zuzulassen, dass die zugehörigen Rollen, Ackerwalzen oder Scheiben (44) den Umrissen des Geländes, das bearbeitet wird, folgen können, wobei jeder Rahmen (6, 7) an oder hin zu einem proximalen Ende direkt oder indirekt an die Zugstange (2) angelenkt ist und hin zu, aber fern von, einem distalen Ende ein oder mehr Transporträder (19a, 19b, 20a, 20b) hat, die zum Tragen des jeweiligen Rahmens (6, 7), wenn in einer Transportstellung, angeordnet sind, wobei jeder Rahmen (6, 7) ferner einen Arretierungsmechanismus (17, 18) aufweist, der zur Arretierung benachbarter Unterrahmen (6a - 6c, 7a - 7c) aneinander angeordnet ist, so dass die jeweiligen Rollen, Ackerwalzen oder Scheiben (44) alle im Wesentlichen in einer gemeinsamen horizontalen Ebene liegen und wobei die Rahmen von der offenen Arbeitsstellung in die geschlossene Transportstellung geklappt werden können, in der jeder Rahmen (6, 7) so geklappt ist, dass die Rahmen (6, 7) in der gleichen Richtung verlaufen und im Wesentlichen parallel zueinander und zur Achse der Zugstange (2) liegen.

10. Landwirtschaftliches Arbeitsgerät (1) nach Anspruch 9, wobei die Arretierungsmechanismen (17, 18) aktiviert werden, während sie in der Transportstellung sind, um die Unterrahmen (6a - 6c, 7a - 7c) zu arretieren, so dass die Rahmen (6, 7) von den Transporträdern (19a, 19b, 20a, 20b) getragen werden können, was die Rollen, Ackerwalzen oder Scheiben (44) so anhebt, dass das Arbeitsgerät (1) rückwärts gefahren werden kann, während es anfänglich in der Transportstellung ist, um die Rahmen (6, 7) zu veranlassen oder dabei zu unterstützen, sich in die Arbeitsstellung zu öffnen.

11. Landwirtschaftliches Arbeitsgerät (1) nach einem der vorhergehenden Ansprüche, das ferner ein Synchronisationsgestänge (25) aufweist, das sich zwischen beiden Rahmen (6, 7) erstreckt und direkt oder indirekt mit der Zugstange (2) verbunden ist, wobei das Synchronisationsgestänge (25) so angeordnet ist, dass es veranlasst, dass sich die zwei Rahmen (6, 7) synchron miteinander öffnen.

12. Landwirtschaftliches Arbeitsgerät (1) nach einem der vorhergehenden Ansprüche, wobei der linke und der rechte Rahmen (6, 7) jeweils ein oder mehr Transporträder (97, 98) hat, die an einer gemeinsamen Achse montiert sind, wobei diese Achse gedreht werden kann, um die Richtung des Rads bzw. der Räder relativ zum Rahmen (6, 7) zu ändern; und das ferner ein Mittel (139 - 145) aufweist zum Abwinkeln des Rads oder der Räder (97, 98) am linken und am rechten Rahmen nach außen, wenn in der Transportstellung nach hinten gekehrt, so dass, wenn das Arbeitsgerät in der Transportstellung rückwärts gefahren wird, die nach außen gekehrten Räder veranlassen, dass sich die Rahmen öffnen, oder zum Abwinkeln des Rads oder der Räder am linken und am rechten Rahmen nach außen, wenn in der Transportstellung nach vorn gekehrt, so dass, wenn das Arbeitsgerät in der Transportstellung (1) vorwärtsgeschleppt wird, die nach außen gekehrten Räder veranlassen, dass sich die Rahmen öffnen.

13. Landwirtschaftliches Arbeitsgerät (1) nach einem der vorhergehenden Ansprüche, das ferner ein Mittel zum Drehen der Rahmen (6, 7) von der Arbeitsstellung um eine Achse, die im Wesentlichen parallel zu den Rahmen und lotrecht zur Zugstange (2) ist, aufweist, bei dem die Transporträder (97, 98) angeordnet sind, um so gedreht zu werden, dass sie im Wesentlichen orthogonal zu ihrem jeweiligen Rahmen sind, und wodurch das Drehen der Rahmen um die Achse, die im Wesentlichen lotrecht zur Zugstange (2) ist, die Ackerwalzen oder Rollen (44) an den Rahmen (6, 7) anhebt und das Gewicht der Ackerwalzen oder Rollen und der Rahmen im Wesentlichen auf die Transporträder (97, 98) verlagert.

14. Landwirtschaftliches Arbeitsgerät (1) nach Anspruch 13 wobei, sobald die Transporträder (97, 98) die Ackerwalzen oder Rollen (44) tragen, die Transporträder angeordnet sind, um so gedreht zu werden, dass sie im Wesentlichen auf die Rahmen (6, 7) ausgerichtet sind.

## Revendications

1. Outil agricole (1) comprenant une barre d'attelage (2) ayant un dispositif d'attelage ou une liaison multipoint (3) à son extrémité avant et un chariot (4) ayant des châssis porte-outil (6, 7) montés de façon pivotante au niveau de leurs extrémités proximales sur le chariot, les châssis (6, 7), dans une configuration de travail en utilisation, s'étendant sur des côtés opposés du chariot (4), sensiblement orthogonalement à la barre d'attelage (2), les châssis (6, 7) étant agencés pour être pliés vers l'intérieur dans une configuration de transport lorsque leurs extrémités proximales sont situées en avant de leurs extrémités distales qui s'étendent vers l'arrière de l'outil (1), dans lequel le chariot (4) est agencé pour se déplacer vers l'avant et vers l'arrière le long de la barre d'attelage (2) de sorte que, dans la configuration de transport, le chariot (4) peut être positionné vers l'avant de la barre d'attelage (2) avec les châssis (6, 7) pliés le long des côtés de la barre d'attelage (2) et, dans la configuration de travail, le chariot (4) et les châssis (6, 7) peuvent être positionnés vers l'arrière de la barre d'attelage (2), **caractérisé en ce que** l'outil (1) est agencé de telle sorte que les châssis (6, 7) peuvent être étendus vers l'extérieur à partir de la configuration de transport dans leur configuration de travail avant que la barre d'attelage (2) ne soit tirée à travers le chariot (4) pour placer l'outil dans la configuration de travail.

2. Outil agricole (1) selon la revendication 1, comprenant en outre un support (30) sur la barre d'attelage (2) situé en avant de la position du chariot (4) lorsqu'il est dans la configuration de transport, et deux bras de retenue (31, 32), chacun fixé sur le support (30) à une extrémité et à un châssis respectif (6, 7) à l'autre extrémité, lesquels les bras de retenue (31, 32) sont télescopiques et sont étendus par l'action de tirage de la barre d'attelage (2) vers l'avant par rapport au chariot (4) .

3. Outil agricole selon la revendication 1 ou 2, dans lequel chaque châssis a une roue ou des roues de transport montées vers, mais à distance d'une extrémité distale de celui-ci.

4. Outil agricole selon la revendication 1, 2 ou 3, dans lequel le chariot comprend un élément tubulaire agencé de manière à coulisser coaxialement sur la barre d'attelage.

5. Outil agricole (1) selon l'une quelconque des revendications précédentes, dans lequel la longueur de la barre d'attelage (2) est fixe.

6. Outil agricole (1) selon l'une quelconque des revendications précédentes, dans lequel la distance entre l'avant de la barre d'attelage (2) et le point sur le chariot (4) sur lequel les châssis (6, 7) pivotent, dans la configuration de travail, est comprise entre 0,2 et 0,3 fois la largeur maximale de l'outil (1).

7. Outil agricole (1) selon l'une quelconque des revendications précédentes, dans lequel chaque châssis (6, 7) supporte un ou plusieurs rouleaux, presses ou disques (44) .

8. Outil agricole (1) selon l'une quelconque des revendications précédentes, comprenant un châssis de gauche (6) agencé de manière à s'étendre sur le côté gauche de la barre d'attelage (2) et un châssis de droite (7) agencé de façon s'étendre sur le côté droit de la barre d'attelage (2), dans lequel les extrémités proximales des châssis de gauche et de droite (6, 7) sont chacune reliées de façon pivotante dans un axe sensiblement vertical au chariot (4) afin de leur permettre de s'ouvrir et de se fermer entre la configuration de transport et configuration de travail.

9. Outil agricole (1) selon l'une quelconque des revendications précédentes, comprenant un châssis de gauche (6) agencé de manière à s'étendre sur le côté gauche de la barre d'attelage (2) et un châssis de droite (7) agencé de façon à s'étendre sur le côté droit de la barre d'attelage (2), chaque châssis (6, 7) comprenant une pluralité de sous-châssis (6a-6c, 7a-7c), chaque sous-châssis (6a-6c, 7a-7c) supportant un axe supportant un rouleau, une presse ou des disques (44), chaque sous-châssis (6a-6c, 7a-7c) étant relié de manière pivotante à un ou des sous-châssis adjacents de telle sorte que, en utilisation, dans une configuration de travail ouverte où chaque châssis (6, 7) s'étend sensiblement orthogonalement à partir de la barre d'attelage (2), chacun des châssis de gauche et de droite (6, 7) peut fléchir en raison de sous-châssis adjacents (6a-6c, 7a-7c) pivotant les uns par rapport aux autres, pour permettre aux rouleaux, presses ou disques associés (44) de suivre les contours de la terre à travailler, dans lequel chaque châssis (6, 7) est relié de manière pivotante à ou vers une extrémité proximale, directement ou indirectement, à la barre d'attelage (2) et a vers, mais à distance d'une extrémité distale, une ou plusieurs roues de transport (19a, 19b, 20a, 20b) agencées pour supporter le châssis respectif (6, 7) lorsqu'il est dans une configuration de transport, chaque châssis (6, 7) comprenant en outre un mécanisme de verrouillage (17, 18) agencé pour verrouiller des sous-châssis adjacents (6a-6c, 7a-7c) ensemble de sorte que les rouleaux, presses ou disques respectifs (44) sont tous situés sensiblement sur un plan horizontal commun, et dans lequel les châssis peuvent être pliés à partir de la configuration de travail ouverte dans la configuration de transport fermée, où chaque châssis (6, 7) est plié de sorte que les châssis (6, 7) s'étendent dans la même direction et sont situés sensiblement parallèles les uns aux autres et à l'axe de la barre d'attelage (2).

10. Outil agricole (1) selon la revendication 9, dans lequel les mécanismes de verrouillage (17, 18) sont activés tandis qu'il est dans la configuration de transport pour verrouiller les sous-châssis (6a-6c, 7a-7c) de telle sorte que les châssis (6, 7) peuvent être supportés par les roues de transport (19a, 19b, 20a, 20b), levant les rouleaux, presses ou disques (44) de telle sorte que l'outil (1) peut être inversé alors qu'il est d'abord dans la configuration de transport pour amener ou aider les châssis (6, 7) à s'ouvrir vers la configuration de travail.

11. Outil agricole (1) selon l'une quelconque des revendications précédentes, comprenant en outre une liaison de synchronisation (25) s'étendant entre chaque châssis (6, 7) et reliée directement ou indirectement à la barre d'attelage (2), la liaison de synchronisation (25) étant agencée de manière à amener les deux châssis (6, 7) à s'ouvrir en synchronisme l'un avec l'autre.

12. Outil agricole (1) selon l'une quelconque des revendications précédentes, dans lequel chacun des châssis de gauche et de droite (6, 7) comporte une ou plusieurs roues de transport (97, 98) montées sur un axe commun, lequel axe peut être tourné pour changer la direction de la roue ou des roues par rapport au châssis (6, 7); et comprenant en outre des moyens (139-145) pour incliner la roue ou les roues (97, 98) à la fois sur le châssis de gauche et le châssis de droite vers l'extérieur lorsqu'elles sont tournées vers l'arrière dans la configuration de transport, de telle sorte que lorsque l'outil est inversé dans la configuration de transport, les roues tournées vers l'extérieur amènent les châssis à s'ouvrir, ou pour incliner la ou les roues à la fois sur le châssis de gauche et le châssis de droite vers l'extérieur lorsqu'elles sont tournées vers l'avant dans la configuration de transport, de sorte que lorsque l'outil (1) est tiré vers l'avant dans la configuration de transport, les roues tournées vers l'extérieur amènent les châssis à s'ouvrir.

13. Outil agricole (1) selon l'une quelconque des revendications précédentes, comprenant en outre des moyens pour faire tourner les châssis (6, 7) à partir de la configuration de travail autour d'un axe sensiblement parallèle aux châssis et perpendiculaire à la barre d'attelage (2) où les roues de transport (97, 98) sont agencées pour être mises en rotation de telle sorte qu'elles sont sensiblement orthogonales à leurs châssis respectifs, et grâce à quoi la rotation des châssis autour de l'axe sensiblement perpendiculaire à la barre d'attelage (2) soulève des presses ou des rouleaux (44) sur les châssis (6, 7) et transfère la masse des presses ou des rouleaux et des châssis sensiblement sur les roues de transport (97, 98).

14. Outil agricole (1) selon la revendication 13, dans lequel, une fois que les roues de transport (97, 98) supportent les presses ou les rouleaux (44), les roues de transport sont agencées pour être mises en rotation de telle sorte qu'elles sont sensiblement alignées avec les châssis (6, 7).
